# EUROPEAN PATENT APPLICATION

(11) **EP 4 608 008 A1**
(43) Date of publication of application: **27.08.2025**
(21) Application number: 23886351.8
(22) Date of filing: 03.11.2023
(51) Int. Cl.: H04W 36/00, H04W 36/14, H04W 28/02, H04L 47/263, H04L 47/11, H04L 47/19, H04L 47/20

(54) **METHOD AND DEVICE FOR PROVIDING CONGESTION INFORMATION IN COMMUNICATION SYSTEM**

(30) Priority: 03.11.2022 KR 20220145262
(71) Applicant: Samsung Electronics Co., Ltd., Suwon-si, Gyeonggi-do 16677 (KR)
(72) Inventor: BAE, Jaehyeon, Suwon-si, Gyeonggi-do 16677 (KR); BAEK, Youngkyo, Suwon-si, Gyeonggi-do 16677 (KR); LEE, Jicheol, Suwon-si, Gyeonggi-do 16677 (KR)
(74) Representative: Nederlandsch Octrooibureau
(86) International application number: PCT/KR2023/017478
(87) International publication number: WO 2024/096657

(57) **Abstract**

The present disclosure relates to a 5G or pre-5G communication system to be provided in order to support higher data transmission rates than 4G communication systems such as LTE. According to an embodiment of the present disclosure, a method performed by a session management function (SMF) entity in a communication system is provided, the method comprising the steps of: identifying that an explicit congestion notification (ECN) marking function for a low latency, low loss and scalable throughput (L4S) service is activated in a source radio access network (S-RAN) of a terminal but the ECN marking function for the L4S is not activated in a target RAN (T-RAN) of the terminal; and transmitting information requesting activation of the ECN marking function for the L4S to a user plane function (UPF) entity on the basis of identifying that the explicit congestion notification (ECN) marking function for the L4S service is activated in the S-RAN of a terminal but the ECN marking function for the L4S is not activated in the T-RAN of the terminal.

## Description

### [Technical Field]

The disclosure relates to a device and method for providing congestion information in a communication system.

### [Background Art]

In order to meet the demand for wireless data traffic soring since the 4G communication system came to the market, there are ongoing efforts to develop enhanced 5G communication systems or pre-5G communication systems. For the reasons, the 5G communication system or pre-5G communication system is called the beyond 4G network communication system or post LTE system.

For higher data transmit rates, 5G communication systems are considered to be implemented on ultra-high frequency bands (mmWave), such as, e.g., 60GHz. To mitigate pathloss on the ultra-high frequency band and increase the reach of radio waves, the following techniques are taken into account for the 5G communication system: beamforming, massive multi-input multi-output (MIMO), full dimensional MIMO (FD-MIMO), array antenna, analog beamforming, and large scale antenna.

Also being developed are various technologies for the 5G communication system to have an enhanced network, such as evolved or advanced small cell, cloud radio access network (cloud RAN), ultra-dense network, device-to-device (D2D) communication, wireless backhaul, moving network, cooperative communication, coordinated multi-point (CoMP), and interference cancellation.

There are also other various schemes under development for the 5G system including, e.g., hybrid FSK and QAM modulation (FQAM) and sliding window superposition coding (SWSC), which are advanced coding modulation (ACM) schemes, and filter bank multi-carrier (FBMC), non-orthogonal multiple access (NOMA) and sparse code multiple access (SCMA), which are advanced access schemes.

Meanwhile, the 3GPP, which is in charge of cellular mobile communication standardization, has named the new core network structure 5G core (5GC) and standardized the same to promote the evolution from the legacy 4G LTE system to the 5G system.

5GC supports the following differentiated functions as compared to the evolved packet core (EPC), which is the legacy network core for 4G.

First, 5GC adopts the network slicing function. As a requirement of 5G, 5GC should support various types of terminals and services, e.g., enhanced mobile broadband (eMBB), ultra reliable low latency communications (URLLC), or massive machine type communications (mMTC). These UEs/services have different requirements for the core network. For example, the eMBB service requires a high data rate while the URLLC service requires high stability and low latency. Network slicing is technology proposed to meet such various requirements.

Network slicing is a method for creating multiple logical networks by virtualizing one physical network, and the network slice instances (NSIs) may have different characteristics. Therefore, various service requirements may be met by allowing each NSI to have a network function (NF) suited for its characteristics. Various 5G services may be efficiently supported by allocating an NSI meeting required service characteristics for each UE.

Second, 5GC may seamlessly support the network virtualization paradigm by separating the mobility management function and the session management function. In legacy 4G LTE, all UEs may receive services over the network through signaling exchange with a single core device called the mobility management entity (MME) in charge of registration, authentication, mobility management and session management functions. However, in 5G, the number of UEs explosively increases and mobility and traffic/session characteristics that need to be supported according to the type of UE are subdivided. Resultantly, if all functions are supported by a single device, such as MME, the scalability of adding entities for each required function may decrease. Accordingly, various functions are under development based on a structure that separates the mobility management function and the session management function to enhance the scalability in terms of function/implementation complexity of the core equipment in charge of the control plane and the signaling load.

### [Detailed Description of the Invention]

### [Technical Problem]

For metaverse and extended reality (XR) applications, UEs should transmit a large amount of traffic via uplink, so effectively handling uplink traffic requires that critical technical issues be addressed unlike conventional applications. Whereas conventional research efforts have focused on effectively transmitting downlink traffic, metaverse/XR traffic is subjected to a new challenge of effectively processing uplink traffic.

Low latency, low loss and scalable throughput (L4S) services are supported in many devices and servers thanks to an advantage in that a signal indicating congestion and whether L4S explicit congestion notification (ECN) is supported is delivered by an in-band marking over a conventional protocol without the need for a separate call processing signal of the control plane between intermediate nodes.

Metaverse and XR applications require that a relatively large amount of uplink data be transmitted and, when network congestion occurs, may apply a method of adjusting the uplink transmission rate considering network congestion.

### [Technical Solution]

According to an aspect of the disclosure, there may be provided a device and method for providing congestion information in a communication system.

According to an aspect of the disclosure, there may be provided a device and method for providing congestion information based on whether L4S (ECN) is supported in a communication system.

According to an aspect of the disclosure, there may be provided a device and method for handling congestion information in a changed base station based on whether L4S (ECN) is supported when a base station is changed as a UE moves in a communication system.

According to an aspect of the disclosure, there is provided a method performed by a session management function (SMF) entity in a communication system, comprising identifying that an explicit congestion notification (ECN) marking function for a low latency, low loss and scalable throughput (L4S) service is activated in a source radio access network (S-RAN) of a UE while the ECN marking function for the L4S is not activated in a target RAN (T-RAN) of the UE, and based on identifying that the ECN marking function for the L4S service is activated in the S-RAN while the ECN marking function for the L4S is not activated in the T-RAN, transmitting information for requesting to activate the ECN marking function for the L4S to a user plane function (UPF) entity.

According to an aspect of the disclosure, there is provided a session management function (SMF) entity in a communication system, comprising a transceiver, and at least one processor, wherein the at least one processor is configured to: identify that an explicit congestion notification (ECN) marking function for a low latency, low loss and scalable throughput (L4S) service is activated in a source radio access network (S-RAN) of a UE while the ECN marking function for the L4S is not activated in a target RAN (T-RAN) of the UE, and based on identifying that the ECN marking function for the L4S service is activated in the S-RAN while the ECN marking function for the L4S is not activated in the T-RAN, transmit, through the transceiver, information for requesting to activate the ECN marking function for the L4S to a user plane function (UPF) entity.

According to an aspect of the disclosure, there is provided a user plane function (UPF) entity in a communication system, comprising a transceiver, and at least one processor, wherein the at least one processor is configured to: receive, through the transceiver, information for requesting to activate an explicit congestion notification (ECN) marking function for a low latency, low loss and scalable throughput (L4S) service from a user plane function (UPF) entity from a session management function (SMF) entity, and wherein the information for requesting to activate the ECN marking function for the L4S is received when the ECN marking function for the L4S service is activated in a source radio access network (S-RAN) of a UE is activated while the ECN marking function for the L4S is not activated in a target RAN (T-RAN). According to an aspect of the disclosure, there is provided a method for operating an access and mobility management function (AMF) entity in a communication system, comprising receiving a handover required message including information related to whether a low latency, low loss and scalable throughput (L4S) service is supported in a source radio access network (S-RAN) of a UE from the S-RAN, transmitting a protocol data unit (PDU) session management (SM) update request message including the information related to whether the L4S service is supported in the S-RAN to a session management function (SMF) entity based on the handover required message, and receiving a PDU session SM update response message from the SMF entity in response to the session SM update request message.

According to an aspect of the disclosure, there is provided a method for operating a radio access network (RAN) in a communication system, comprising determining a handover of a UE and transmitting a handover required message including information related to whether a low latency, low loss and scalable throughput (L4S) service is supported to an access and mobility management function (AMF) entity.

According to an aspect of the disclosure, there is provided an access and mobility management function (AMF) entity in a communication system, comprising a transceiver and at least one processor configured to receive, through the transceiver, a handover required message including information related to whether a low latency, low loss and scalable throughput (L4S) service is supported in a source radio access network (S-RAN) of a UE from the S-RAN, transmit, through the transceiver, a protocol data unit (PDU) session management (SM) update request message including the information related to whether the L4S service is supported in the S-RAN to a session management function (SMF) entity based on the handover required message, and receive, through the transceiver, a PDU session SM update response message from the SMF entity in response to the session SM update request message.

According to an aspect of the disclosure, there is provided a radio access network (RAN) in a communication system, comprising a transceiver and at least one processor configured to determine a handover of a UE and transmit, through the transceiver, a handover required message including information related to whether a low latency, low loss and scalable throughput (L4S) service is supported to an access and mobility management function (AMF) entity.

### [Advantageous Effects]

According to an embodiment of the disclosure, when a base station change occurs as the UE moves, and the changed base station does not support L4S/ECN marking for in-band signaling, separate congestion occurrence information is transferred on the control plane to the session management function (SMF) entity, and the SMF entity transfers the congestion occurrence information to the user plane function (UPF) entity so that the UPF entity may perform L4S/ECN marking and then notify the application server (AS) of the occurrence of congestion through in-band signaling. Accordingly, a service considering the congestion control circumstance may be provided even when the intermediate network device does not support the L4S service.

Further, when the UPF entity does not support L4S/ECN marking as the changed base station cannot transfer the congestion occurrence information to the SMF entity on the control plane due to various reasons such as the operator policy, the changed base station may update the existing quality of service (QoS) flow information considering L4S traffic with QoS flow information not considering L4S traffic, thereby continuing the existing service even when the UE moves.

### [Brief Description of Drawings]

FIG. 1 is a view illustrating a network structure and interface of a 5G system according to an embodiment of the disclosure;
FIG. 2 is a view illustrating an operation when an L4S/ECN marking is applied in a RAN in a wireless communication system according to an embodiment of the disclosure;
FIG. 3 is a view illustrating an issue that may occurs when a UE moves to a RAN which does not support a congestion header marking in a wireless communication system according to an embodiment of the disclosure;
FIG. 4 is a view illustrating an explicit congestion notification (ECN) bit in a type of service (TOS) field of an IP header according to an embodiment of the disclosure;
FIG. 5 is a view illustrating an operation in which when a RAN does not support L4S/ECN marking, a congestion information report is transmitted to an SMF entity on a control plane, and the SMF entity transfers congestion information to a UPF entity to perform L4S/ECN marking according to an embodiment of the disclosure;
FIG. 6 is a view illustrating an L4S service setup step between a UE and AS and 5G core network and reflecting a policy for L4S/ECN marking to a UPF entity and a RAN through a policy update step for L4S support information and related requirements and transferring L4S support information and related requirements from an AF entity to a PCF entity for an L4S service in a communication system according to an embodiment of the disclosure;
FIG. 7A is a signal flowchart schematically illustrating operations of a handover preparation step in a handover method between N2-based NG-RANs according to a movement of a UE in a communication system according to an embodiment of the disclosure;
FIGS. 7B and 7C are signal flowcharts schematically illustrating operations of a handover preparation step in a handover method between N2-based NG-RANs according to a movement of a UE in a communication system according to an embodiment of the disclosure;
FIGS. 7D and 7E are signal flowcharts schematically illustrating operations when a congestion occurs after handover is executed as a UE moves in a communication system according to an embodiment of the disclosure;
FIGS. 7F, 7G, and 7H are signal flowcharts illustrating an operation in which when a congestion occurs after handover is executed as a UE moves in a communication system, congestion occurrence information is transferred to a UPF entity on a control plane to perform L4S/ECN marking according to an embodiment of the disclosure;
FIGS. 8A, 8B, and 8C are signal flowcharts schematically illustrating an Xn-based handover process from a source-RAN to a target-RAN as UE moves in a communication system according to an embodiment of the disclosure;
FIG. 9 is a view schematically illustrating an example of a structure of a network entity according to an embodiment of the disclosure;
FIG. 10 is a view schematically illustrating an example of a structure of a UE according to an embodiment of the disclosure;
FIG. 11 is a block diagram schematically illustrating another example of a structure of a UE according to an embodiment of the disclosure; and
FIG. 12 is a block diagram schematically illustrating another example of a structure of a network entity according to an embodiment of the disclosure.

### [Mode for Carrying out the Invention]

Hereinafter, an embodiment of the disclosure is described in detail with reference to the accompanying drawings.

In describing the disclosure, the description of technologies that are known in the disclosure and are not directly related to the disclosure is omitted. This is for further clarifying the gist of the present disclosure without making it unclear. The terms as used herein are defined considering the functions in the present disclosure and may be replaced with other terms according to the intention or practice of the user or operator. Therefore, the terms should be defined based on the overall disclosure.

For the same reasons, some elements may be exaggerated or schematically shown. The size of each element does not necessarily reflects the real size of the element. The same reference numeral is used to refer to the same element throughout the drawings.

Advantages and features of the present disclosure, and methods for achieving the same may be understood through the embodiments to be described below taken in conjunction with the accompanying drawings. However, the present disclosure is not limited to the embodiments disclosed herein, and various changes may be made thereto. The embodiments disclosed herein are provided only to inform one of ordinary skilled in the disclosure of the category of the present disclosure. The present disclosure is defined only by the appended claims. The same reference numeral denotes the same element throughout the specification. When determined to make the subject matter of the present disclosure unclear, the detailed description of the known art or functions may be skipped. The terms as used herein are defined considering the functions in the present disclosure and may be replaced with other terms according to the intention or practice of the user or operator. Therefore, the terms should be defined based on the overall disclosure.

Hereinafter, a base station (BS) is an entity that performs resource allocation of a UE, and may be at least one of a gNode B, eNode B, Node B, (or xNode B (where x is an alphabetic character including g and e)), a radio access unit, a base station controller, a satellite, an airborne, or a node on network. The user equipment (UE) may include a mobile station (MS), vehicle, satellite, airborne, cellular phone, smartphone, computer, or multimedia system capable of performing communication functions. In the disclosure, downlink (DL) refers to a wireless transmission path of signal transmitted from the base station to the terminal, and uplink (UL) refers to a wireless transmission path of signal transmitted from the terminal to the base station. Additionally, a sidelink (SL) meaning a radio transmission path of a signal transmitted from a UE to another UE may exist.

Although LTE, LTE-A, or 5G systems may be described below as an example, the embodiments may be applied to other communication systems having a similar technical background or channel pattern. For example, embodiments of the disclosure may also encompass 5G-advance or NR-advance or 6th generation mobile communication technology (6G) developed after 5G mobile communication technology (or new radio, NR). The following 5G may be a concept encompassing the legacy LTE, LTE-A and other similar services. Further, the disclosure may be modified in such a range as not to significantly depart from the scope of the present disclosure under the determination by one of ordinary skill in the art and such modifications may be applicable to other communication systems.

It should be appreciated that the blocks in each flowchart and combinations of the flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, 'unit' is not limited to software or hardware. A'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. According to embodiments, a "...unit" may include one or more processors.

Wireless communication systems evolve beyond voice-centered services to broadband wireless communication systems to provide high data rate and high-quality packet data services, such as 3rd generation partnership project (3GPP) high speed packet access (HSPA), long term evolution (LTE) or evolved universal terrestrial radio access (E-UTRA)), LTE-advanced (LTE-A), LTE-pro, 3GPP2 high rate packet data (HRPD), ultra mobile broadband (UMB), and institute of electrical and electronics engineers (IEEE) 802.16e communication standards.

As a representative example of such broadband wireless communication system, the LTE system adopts orthogonal frequency division multiplexing (OFDM) for downlink and single carrier frequency division multiple access (SC-FDMA) for uplink. Uplink means a wireless link where the UE transmits data or control signals to the base station, and download means a wireless link where the base station transmits data or control signals to the UE. Such multiple access scheme may typically allocate and operate time-frequency resources carrying data or control information per user not to overlap, i.e., to maintain orthogonality, to thereby differentiate each user's data or control information.

Post-LTE communication systems, e.g., 5G communication systems, are required to freely reflect various needs of users and service providers and thus to support services that simultaneously meet various requirements. Services considered for 5G communication systems include, e.g., enhanced mobile broadband (eMBB), massive machine type communication (MMTC), and ultra reliability low latency communication (URLLC).

eMBB aims to provide a further enhanced data transmission rate as compared with LTE, LTE-A, or LTE-pro. For example, eMBB for 5G communication systems needs to provide a peak data rate of 20Gbps on download and a peak data rate of 10Gbps on uplink in terms of one base station. 5G communication systems also need to provide an increased user perceived data rate while simultaneously providing such peak data rate. To meet such requirements, various transmit (TX)/receive (RX) techniques, as well as multiple input multiple output (MIMO), need to further be enhanced. While LTE adopts a TX bandwidth up to 20MHz in the 2GHz band to transmit signals, the 5G communication system employs a broader frequency bandwidth in a frequency band ranging from 3GHz to 6GHz or more than 6GHz to meet the data rate required for 5G communication systems.

mMTC is also considered to support application services, such as internet of things (IoT) in the 5G communication system. To efficiently provide IoT, mMTC is required to support massive UEs in the cell, enhance the coverage of the UE and the battery time, and reduce UE costs. IoT terminals are attached to various sensors or devices to provide communication functionality, and thus, it needs to support a number of UEs in each cell (e.g., 1,000,000 UEs/km²). Since mMTC-supportive UEs, by the nature of service, are highly likely to be located in shadow areas not covered by the cell, such as the underground of a building, it may require much broader coverage as compared with other services that the 5G communication system provides. mMTC-supportive UEs, due to the need for being low cost and difficulty in frequently exchanging batteries, may be required to have a very long battery life, e.g., 10 years to 15years.

URLLC is a mission-critical, cellular-based wireless communication service. For example, URLLC may be considered for use in remote control for robots or machinery, industrial automation, unmanned aerial vehicles, remote health care, or emergency alert. This requires that URLLC provide very low-latency and very high-reliability communication. For example, URLLC-supportive services need to meet an air interface latency of less than 0.5 milliseconds simultaneously with a packet error rate of 10⁻⁵ or less. Thus, for URLLC-supportive services, the 5G communication system may be required to provide a shorter transmit time interval (TTI) than those for other services while securing reliable communication links by allocating a broad resource in the frequency band.

The three 5G services, i.e., eMBB, URLLC, and mMTC, may be multiplexed in one system and be transmitted. In this case, the services may adopt different TX/RX schemes and TX/RX parameters to meet their different requirements. Of course, 5G is not limited to the above-described three services.

5G mobile communication technology defines a wide frequency band to enable fast transmission speed and new services and may be implemented in frequencies below 6GHz ('sub 6GHz'), such as 3.5 GHz, as well as in ultra-high frequency bands ('above 6GHz'), such as 28GHz and 39GHz called millimeter wave (mmWave). Further, 6G mobile communication technology, which is called a beyond 5G system, is considered to be implemented in terahertz bands (e.g., 95GHz to 3 THz) to achieve a transmission speed 50 times faster than 5G mobile communication technology and ultra-low latency reduced by 1/10.

In the early stage of 5G mobile communication technology, standardization was conducted on beamforming and massive MIMO for mitigating propagation pathloss and increasing propagation distance in ultrahigh frequency bands, support for various numerologies for efficient use of ultrahigh frequency resources (e.g., operation of multiple subcarrier gaps), dynamic operation of slot format, initial access technology for supporting multi-beam transmission and broadband, definition and operation of bandwidth part (BWP), new channel coding, such as low density parity check (LDPC) code for massive data transmission and polar code for high-reliable transmission of control information, L2 pre-processing, and network slicing for providing a dedicated network specified for a specific service, so as to meet performance requirements and support services for enhanced mobile broadband (eMBB), ultra-reliable low-latency communications (URLLC), and massive machine-type communications (mMTC).

Currently, improvement and performance enhancement in the initial 5G mobile communication technology is being discussed considering the services that 5G mobile communication technology has intended to support, and physical layer standardization is underway for technology, such as vehicle-to-everything (V2X) for increasing user convenience and assisting autonomous vehicles in driving decisions based on the position and state information transmitted from the VoNR, new radio unlicensed (NR-U) aiming at the system operation matching various regulatory requirements, NR UE power saving, non-terrestrial network (NTN) which is direct communication between UE and satellite to secure coverage in areas where communications with a terrestrial network is impossible, and positioning technology.

Also being standardized are radio interface architecture/protocols for technology of industrial Internet of things (IIoT) for supporting new services through association and fusion with other industries, integrated access and backhaul (IAB) for providing nodes for extending the network service area by supporting an access link with the radio backhaul link, mobility enhancement including conditional handover and dual active protocol stack (DAPS) handover, 2-step random access (RACH for NR) to simplify the random access process, as well as system architecture/service fields for 5G baseline architecture (e.g., service based architecture or service based interface) for combining network functions virtualization (NFV) and software-defined networking (SDN) technology and mobile edge computing (MEC) for receiving services based on the position of the UE.

As 5G mobile communication systems are commercialized, soaring connected devices would be connected to communication networks so that reinforcement of the function and performance of the 5G mobile communication system and integrated operation of connected devices are expected to be needed. To that end, new research is to be conducted on, e.g., extended reality (XR) for efficiently supporting, e.g., augmented reality (AR), virtual reality (VR), and mixed reality (MR), and 5G performance enhancement and complexity reduction using artificial intelligence (AI) and machine learning (ML), support for AI services, support for metaverse services, and drone communications.

Further, development of such 5G mobile communication systems may be a basis for multi-antenna transmission technology, such as new waveform for ensuring coverage in 6G mobile communication terahertz bands, full dimensional MIMO (FD-MIMO), array antenna, and large scale antenna, full duplex technology for enhancing the system network and frequency efficiency of 6G mobile communication technology as well as reconfigurable intelligent surface (RIS), high-dimensional space multiplexing using orbital angular momentum (OAM), metamaterial-based lens and antennas to enhance the coverage of terahertz band signals, AI-based communication technology for realizing system optimization by embedding end-to-end AI supporting function and using satellite and artificial intelligence (AI) from the step of design, and next-generation distributed computing technology for implementing services with complexity beyond the limit of the UE operation capability by way of ultrahigh performance communication and computing resources.

The 3GPP, which is in charge of cellular mobile communication standardization, has named the new core network structure 5G core (5GC) and standardized the same to promote the evolution from the 4G LTE system to the 5G system. 5GC supports the following differentiated functions as compared to the evolved packet core (EPC), which is the network core for 4G.

5GC adopts the network slicing function. As a requirement of 5G, 5GC should support various types of terminals and services, e.g., enhanced mobile broadband (eMBB), ultra reliable low latency communications (URLLC), or massive machine type communications (mMTC). These UEs/services have different requirements for the core network. For example, the eMBB service may require a high data rate while the URLLC service may require high stability and low latency. There has been proposed network slicing technology to meet such various requirements.

Network slicing may mean a method for creating several logical networks (e.g., network slices) by virtualizing one physical network. An activated network slice may be referred to as a network slice instance, and each network slice instance (NSI) may have a different characteristic. The mobile communication operator may meet various service requirements according to the UE/service by configuring a network function (NF) fitting the characteristics of each NSI. For example, the mobile communication operator may allocate the NSI fitting the characteristics of the service required for each UE and efficiently support several 5G services (e.g., eMBB, URLLC, or mMTC).

5GC may seamlessly support the network virtualization paradigm through separation of the mobility management function and the session management function. In 4G LTE, all UEs may receive services over the network through signaling exchange with a single core entity called the mobility management entity (MME) in charge of registration, authentication, mobility management and session management functions. In 5G, the number of UEs (including, e.g., MTC UEs) explosively increases and mobility and traffic/session characteristics that need to be supported according to the type of UE are subdivided. Resultantly, if all functions are supported by a single device, such as MME, the scalability of adding entities for each required function may decrease. Accordingly, various functions are under development based on a structure that separates the mobility management function and the session management function to enhance the scalability in terms of function/implementation complexity of the core entity in charge of the control plane and the signaling load.

Hereinafter, embodiments of the present invention are described in detail with reference to the accompanying drawings. When determined to make the subject matter of the present invention unclear, the detailed description of the known art or functions may be skipped. The terms as used herein are defined considering the functions in the present invention and may be replaced with other terms according to the intention or practice of the user or operator. Therefore, the terms should be defined based on the overall disclosure. For the same reasons, some elements may be exaggerated or schematically shown. The size of each element does not necessarily reflects the real size of the element. The same reference numeral is used to refer to the same element throughout the drawings. Advantages and features of the present disclosure, and methods for achieving the same may be understood through the embodiments to be described below taken in conjunction with the accompanying drawings. However, the present disclosure is not limited to the embodiments disclosed herein, and various changes may be made thereto. The embodiments disclosed herein are provided only to inform one of ordinary skilled in the art of the category of the present disclosure. The present disclosure is defined only by the appended claims. The same reference numeral denotes the same element throughout the specification. When determined to make the subject matter of the present disclosure unclear, the detailed description of the known art or functions may be skipped. The terms as used herein are defined considering the functions in the present disclosure and may be replaced with other terms according to the intention or practice of the user or operator. Therefore, the terms should be defined based on the overall disclosure.

Hereinafter, the base station may be an entity allocating resource to terminal and may be at least one of eNodeB, Node B, base station (BS), radio access network (RAN), access network (AN), RAN node, wireless access unit, base station controller, or node over network. The UE may include UE (user equipment), MS (mobile station), cellular phone, smartphone, computer, or multimedia system capable of performing communication functions. According to the present invention, downlink (DL) refers to a wireless transmission path of signal transmitted from the base station to the terminal, and uplink (UL) refers to a wireless transmission path of signal transmitted from the terminal to the base station. Further, although LTE or LTE-A system is described in connection with embodiments of the present disclosure, as an example, embodiments of the present disclosure may also apply to other communication systems with similar technical background or channel form. For example, 5G mobile communication technology (5G, new radio, NR) developed after LTE-A may be included in systems to which embodiments of the disclosure are applicable, and 5G below may be a concept including legacy LTE, LTE-A and other similar services. Further, embodiments of the disclosure may be modified in such a range as not to significantly depart from the scope of the present invention under the determination by one of ordinary skill in the art and such modifications may be applicable to other communication systems. It should be appreciated that the blocks in each flowchart and combinations of the flowcharts may be performed by computer program instructions.

Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions. As used herein, the term "unit" means a software element or a hardware element such as a field-programmable gate array (FPGA) or an application specific integrated circuit (ASIC). A unit may play a certain role. However, 'unit' is not limited to software or hardware. A 'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. According to embodiments, a "...unit" may include one or more processors.

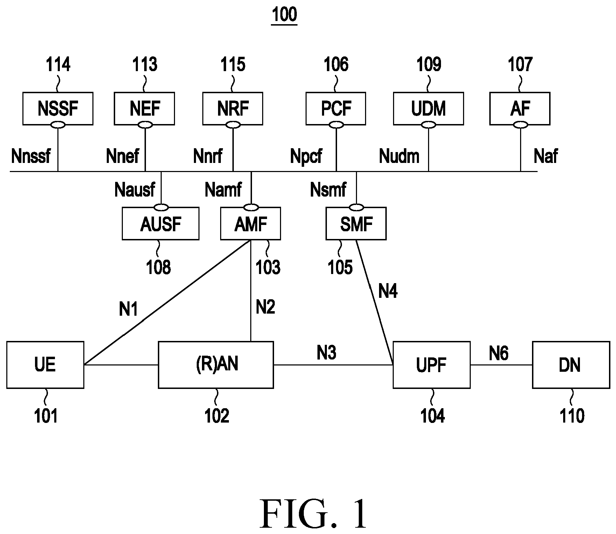

FIG. 1 is a view illustrating a network structure and interface of a 5G system according to an embodiment of the disclosure.

The network entity included in the network architecture of the 5G system of FIG. 1 may include a network function (NF) according to system implementation.

Referring to FIG. 1, the network structure of the 5G system 100 may include various network entities. As an example, the 5G system 100 may include an authentication server function (AUSF) entity 108, an (core) access and mobility management function (AMF) entity 103, a session management function (SMF) entity 105, a policy control function (PCF) entity 106, an application function (AF) entity 107, a unified data management (UDM) entity 109, a data network (DN) entity 110, a network exposure function (NEF) entity 113, a network slicing selection function (NSSF) entity 114, an edge application service domain repository (EDR), an edge application server (EAS), an EAS discovery function (EASDF), a user plane function (UPF) entity 104, a (radio) access network ((R)AN) 102, and a terminal, e.g., user equipment (UE) 101.

Each NF entity of the 5G system 100 supports the following functions.

The AUSF 108 processes and stores data for authenticating the UE 101.

The AMF 103 provides functions for per-UE access and mobility management and may connect basically to one AMF per UE. Specifically, the AMF 103 supports such functions as inter-CN node signaling for mobility between 3GPP access networks, radio access network (RAN) CP interface (i.e., N2 interface) termination, NAS signaling termination (N1), NAS signaling security (NAS ciphering) and integrity protection, AS security control, registration management (registration area management), connectivity management, idle mode UE reachability (including controlling and performing paging retransmission), mobility management control (subscription and policy), intra-system mobility and inter-system mobility support, support of network slicing, SMF selection, lawful intercept (for interface to AMF event and LI system), transfer of session management (SM) messages between UE and SMF, transparent proxy for SM message routing, access authentication, access authorization including a roaming authority check, transfer of SMS messages between UE and SMSF, security anchor function (SEA), and security context management (SCM). All or some of the functions of the AMF entity 103 may be supported in a single instance of one AMF entity.

The DN 110 means, e.g., an operator service, Internet access, or a third party service. The DN 110 transmits a downlink protocol data unit (PDU) to the UPF entity 104 or receives a PDU transmitted from UE 101 from UPF entity 104.

The PCF entity 106 receives information about packet flow from application server and provides the function of determining the policy such as mobility management or session management. Specifically, the PCF entity 106 supports functions such as support of a signalized policy framework for controlling network operations, providing a policy rule to allow control plane function entity(ies) (e.g., AMF entity or SMF entity) to execute a policy rule, and implementation of a front end for accessing subscription information related to policy decision in the user data repository (UDR).

The SMF entity provides session management function and, if the UE 101 has multiple sessions, this may be managed per session by a different SMF entity. Specifically, the SMF entity 105 supports such functions as session management (e.g., session establishment, modification, and release including maintaining tunnel between the UPF 104 entity and the (R)AN 102 node), UE IP address allocation and management (optionally including authentication), selection and control of a UP function, traffic steering settings for routing traffic to a proper destination in UPF entity 104, interface termination towards policy control functions, execution of control part of policy and QoS, lawful intercept (for interface to SM event and LI system), termination of SM part of NAS message, downlink data notification, AN-specific SM information publisher (transferred via the AMF entity 103 and N2 to the (R)AN 102), session and service continuity (SSC) mode decision of session, and roaming function. All or some of the functions of the SMF entity 105 may be supported in a single instance of one SMF entity.

The UDM entity 109 stores, e.g., user's subscription data, policy data. The UDM entity 109 includes two parts, i.e., application front end (FE) (not shown) and user data repository (UDR) (not shown).

FE includes UDM FE in charge of location management, subscription management, and credential processing, and PCF entity in charge of policy control. The UDR stores data required for the functions provided by UDM-FE and the policy profile required by the PCF entity. Data stored in UDR includes policy data and user subscription data including session-related subscription data and access and mobility-related subscription data, security credential, and subscription identity. The UDM-FE accesses the subscription information stored in UDR and supports such functions as authentication credential processing, user identification handling, access authentication, registration/mobility management, subscription management, and SMS management.

The UPF entity 104 transfers the downlink PDU, received from the DN 110, to the UE 101 via the (R)AN 102 and transfers the PDU, received from the UE 101 via the (R)AN 102, to the DN 110. Specifically, the UPF entity 104 supports such functions as anchor point for intra/inter RAT mobility, external PDU session point of interconnection to data network, packet routing and forwarding, packet inspection and user plane part of policy rule, lawful intercept, traffic usage reporting, uplink classifier for supporting routing of traffic flow to data network, branching point for supporting multi-home PDU session, QoS handling (e.g., packet filtering, gating, uplink/downlink rate execution) for user plane, uplink traffic verification (SDF mapping between service data flow (SDF) and QoS flow), transport level packet marking in uplink and downlink, downlink packet buffering, and downlink data notification triggering. All or some of the functions of the UPF entity 104 may be supported in a single instance of one UPF.

The AF entity 107 interacts with 3GPP core network for providing services (e.g., supporting such functions as application influence on traffic routing, network capability exposure approach, and interactions with policy framework for policy control).

The (R)AN 102 collectively refers to new radio access technologies that support both E-UTRA (evolved E-UTRA) which is an evolution from 4G radio access technology and new radio access technology (NR: New Radio) (e.g., gNB).

gNB supports such functions as functions for radio resource management (i.e., radio bearer control, radio admission control, connection mobility control, dynamic allocation of resources (i.e., scheduling) to UE on uplink/downlink), internet protocol (IP) header compression, encryption and integrity protection of user data stream, where routing to AMF is not determined from information provided to UE, selection of an AMF when UE attaches, routing of user plane data to UPF(s), routing of control plane information to AMF, connection setup and release, scheduling and transmission (generated from AMF) of paging message, scheduling and transmission (generated from AMF or operating and maintenance (O&M)) of system broadcast information, measurement and measurement reporting configuration for mobility and scheduling, transport level packet marking on uplink, session management, support of network slicing, QoS flow management and mapping to data radio bearer, support of UE in inactive mode, distribution of NAS messages, NAS node selection, radio access network sharing, dual connectivity, and tight interworking between NR and E-UTRA.

UE 101 means a user device. The user device may be referred to as a terminal, mobile equipment (ME), or mobile station (MS). Further, the user device may be a portable device, such as a laptop computer, mobile phone, personal digital assistant (PDA), smartphone, or multimedia device or may be a non-portable device, e.g., a personal computer (PC) or vehicle-mounted device.

The NEF 111 provides a means to safely expose capabilities and services for, e.g., third party, internal exposure/re-exposure, application functions, and edge computing, provided by the 3GPP network functions. The NEF 111 receives information (based on exposed capability(ies) of other NF(s)) from other NF(s). The NEF 111 may store the received information as structured data using a standardized interface to the data storage network function. The stored information may be re-exposed to other NF entity(ies) and AF entity(ies) by the NEF entity 111 and be used for other purposes, e.g., analysis.

The EASDF 112 is an NF that may add an ECS option that may be expressed by the address of the DNS server to which the DNS request of the UE is to be forwarded and the IP subnet address to be added when forwarding the DNS request of the UE for each FQDN. The EASDF 112 receives EAS domain configuration information from the EDR 113 and processes the DNS request message received from the UE according to the received information. Further, the EASDF 112 is an NF that receives the UE IP address and position information within 3GPP of the UE, DNS message handling rules, and DNS message reporting rules from the SMF 105, processes the DNS query message received from the UE and the DNS response message received from the DNS server, and transmits, to the SMF 105, information in the DNS message and statistic information obtained by processing it, according to the DNS message reporting rule.

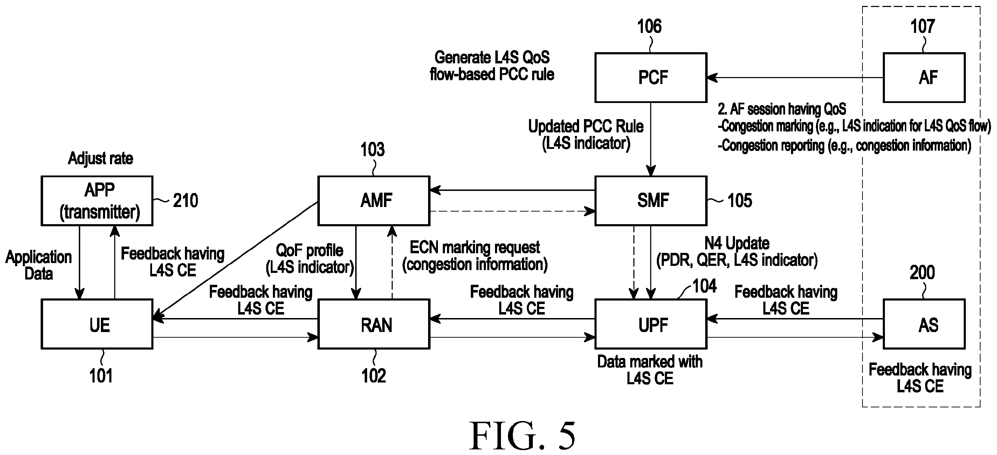

In FIG. 1, the NF repository function (NRF) is not illustrated for clarity of description, but all of the NFs illustrated in FIG. 5 may interact with the NRF if necessary.

An NRF supports service discovery function. receives an NF discovery request from an NF instance and provides discovered NF instance information to the NF instance. further maintains available NF instances and their supporting services.

Meanwhile, although FIG. 1 illustrates an example reference model in which the UE 101 accesses one DN 110 using one PDU session for ease of description, the disclosure is not limited thereto.

The UE 101 may simultaneously access two data networks (i.e., local and central) using multiple PDU sessions. In this case, two SMFs may be selected for different PDU sessions. However, each SMF may have the capability of controlling both the local and central UPFs in the PDU session.

Further, the UE 101 may simultaneously access two (i.e., local and central) data networks provided in a single PDU session.

In the 3GPP system, a conceptual link connecting NFs in the 5G system is defined as a reference point. As an example, reference point(s) included in the 5G system 100 of FIG. 1 are as follows.
- N1: the reference point between the UE 101 and the AMF 103
- N2: the reference point between N2, (R)AN 102, and AMF 103
- N3: the reference point between N2, (R)AN 102, and UPF 104
- N4: the reference point between the SMF 105 and the UPF 104
- N5: the reference point between the PCF 106 and the AF 107
- N6: the reference point between the UPF 104 and the DN 110
   - N7: the reference point between the SMF 105 and the PCF 106
   - N8: the reference point between the UDM 109 and the AMF 103
   - N9: the reference point between two core UPFs 104
   - N10: the reference point between the UDM 109 and the SMF 105
   - N11: the reference point between the AMF 103 and the SMF 105
   - N12: the reference point between the AMF 103 and the AUSF 108
   - N13: the reference point between the UDM 109 and the AUSF 108
   - N14: the reference point between two AMFs 103
   - N15: the reference point between PCF and AMF in non-roaming scenario and reference point between PCF in visited network and AMF in roaming scenario
   - Nx: the reference point between the SMF 105 and the EASDF 112
   - Ny: the reference point between the NEF (EDF) 111 and the EASDF 112

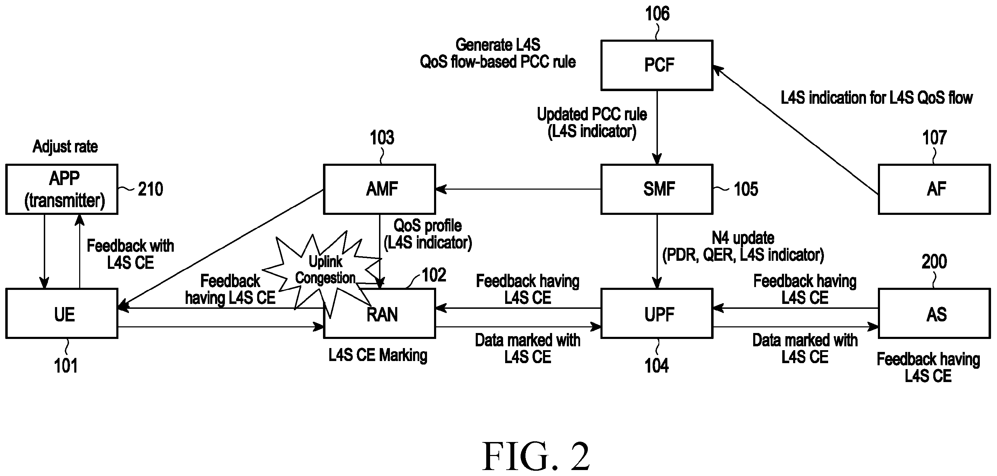

FIG. 2 is a view illustrating an operation when an L4S/ECN marking is applied in a RAN in a wireless communication system according to an embodiment of the disclosure.

Referring to FIG. 2, it is assumed that the UPF entity, the source-RAN, and the UE are configured to be capable of performing L4S/ECN marking in the 5G network. In FIG. 2, when congestion occurs in the RAN while the UE performs data uplink, L4S congestion experience (CE) marking is performed in the IP data traffic transmitted by the RAN. In FIG. 2, if the received data packet is L4S CE marked, ECN echo marking is performed on the feedback packet (e.g., ACK). The CE-marked feedback message sent by the AS of FIG. 2 is transmitted to the UE via UPF and RAN, and the UE interprets the received feedback, and the transmission rate is adjusted at the transport layer or application layer of the UE.

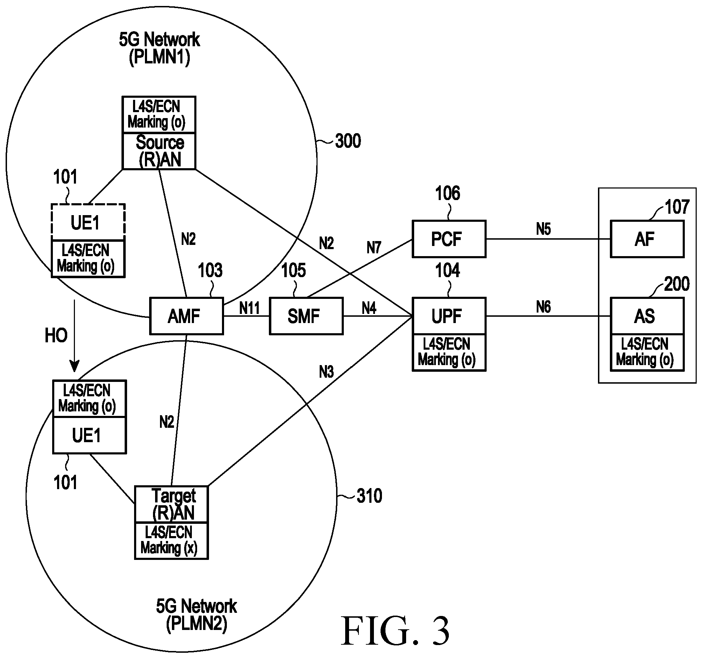

FIG. 3 is a view illustrating an issue that may occurs when a UE moves to a RAN which does not support a congestion header marking in a wireless communication system according to an embodiment of the disclosure.

Referring to FIG. 3, the RAN may be changed according to the movement (handover/HO) of the UE, and the RAN before change is assumed to be the source-RAN, and the RAN after change according to the movement is assumed to be the target-RAN. It is assumed that the UPF, the source-RAN, and the UE are configured to be capable of performing L4S/ECN marking in the 5G network.

A backhaul network may be present together with the 5G system on the path between the UE and the application layer server, and a plurality of routers may be present in the backhaul network. If there is a RAN or a router between the RAN and UPF that does not support L4S/ECN marking on the path between the UE and the application layer server, even when the UE, 5G system, and application layer server support L4S/ECN marking, there may be an issue in which L4S/ECN marking is not provided on the overall end-to-end path. In such a network environment, the AS may not detect congestion in the 5G network.

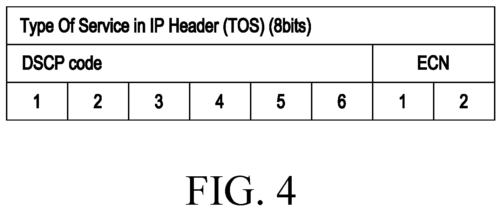

FIG. 4 is a view illustrating an explicit congestion notification (ECN) bit in a type of service (TOS) field of an IP header according to an embodiment of the disclosure.

Referring to FIG. 4, the top six bits of the TOS field are used as differentiated service code points (DSCP), and the bottom two bits may be used as bits for marking ECN congestion. The ECN congestion bit may be encoded to the following value.

. 00 (Non-ECT) ECN transmission not supported

. 01 ECT(1) L4S supportable

. 10 ECT(0) Classical ECN supported

. 11 CE (Congestion Experience)

An embodiment of the disclosure may solve the issue described with reference to FIG. 3 by supporting the following three functions.

First, the AF request or operator determines the policy for congestion marking and marks it when congestion occurs.

Second, when, as the UE moves, the source-RAN before movement provides an ECN marking but the target-RAN after movement does not support ECN marking or the intermediate router between the transceiver and the UPF resets the ECN bit marked by the transceiver, the congestion is known to the SMF through the control plane, and the SMF transfers the same to the UPF so that the UPF may perform L4S/ECN marking and inform the AS of the congestion.

Third, when the target-RAN does not provide the function of informing of the congestion using the control plane and cannot perform ECN marking, it may inform the SMF of it to receive a new QoS flow-based (NoN L4S QoS flow) PCC rule through the PCF, and then, the SMF may transfer the new QoS profile and QoS rule and PDR information to the RAN, UE, and UPF to continue the corresponding service based on the new QoS flow.

The above-described functions may be addressed by providing the following AF request, NEF service provision, congestion marking policy in the PCF, congestion report policy, determination process of congestion local feedback policy, generation of congestion profile or congestion information in RAN, and transfer to SMF, generation of N4 rule and congestion profile or congestion information in the SMF and transfer to the UPF, congestion detection and marking in RAN and UPF, congestion marking according to the request of the SMF entity in the UPF entity, reporting congestion occurrence to the SMF entity from the RAN UPF entity, and the function of reporting it to the AF entity through the present embodiments and NEF entity.

This is described below with reference to FIG. 5.

FIG. 5 is a view illustrating an operation in which when a RAN does not support L4S/ECN marking, a congestion information report is transmitted to an SMF entity on a control plane, and the SMF entity transfers congestion information to a UPF entity to perform L4S/ECN marking according to an embodiment of the disclosure.

Referring to FIG. 5, the congestion notification operation illustrated in FIG. 5 may be a control plane-based congestion notification (CP) operation, and may be a congestion notification operation when a handover occurs between a source NG-RAN (S-NG-RAN) supporting L4S service and a target NG-RAN (T-NG-RAN) not supporting L4S service according to the movement of the UE 101.

The UE 101 may be using a service that supports L4S services through the RAN 102 (e.g., S-NG-RAN) (e.g., based on L4S dedicated QoS flow).

According to the movement of the UE 101, the S-NG-RAN may transmit L4S service support-related information to the AMF entity 103. For example, the L4S service support-related information may be included in the handover required message transmitted from the S-NG-RAN to the AMF entity 103. The L4S service support-related information may be included as L4S service indication information in the source to target transparent container included in the handover required message, or may be transmitted through a separate indication field included in the handover required message.

The AMF entity 103 receiving from the S-NG-RAN may transmit L4S service support-related information to the T-NG-RAN. The L4S service support-related information transmitted from the AMF entity 103 to the T-NG-RAN may include L4S service support-related information transmitted from the S-NG-RAN to the AMF entity 103. For example, the L4S service support-related information may be included in the handover required message transmitted from the AMF entity 103 to the T-NG-RAN. The L4S service support-related information included in the handover required message may include a source to target transparent container (e.g., including L4S service support-related information) included in the handover required message received from the S-NG-RAN and an N2 SM information list.

The T-NG-RAN receiving the handover required message from the AMF entity 103 may transmit a handover request ACK message to the SMF entity 105. The handover request ACK message may include a QoS notification control (QNC) field. The QNC field may include a QoS profile, and the QoS profile may include QNC information. When receiving L4S service support-related information in the form of L4S service indication information included in the source to target transparent container, the T-NG-RAN may include L4S service support-related information in the QNC message. The L4S service support-related information included in the QNC message may indicate that the L4S service may not be supported or that the L4S service may be supported.

The SMF entity 105 receiving the L4S service support-related information from the T-NG-RAN may perform an SM policy association modification procedure with the PCF entity 106. The SMF entity 105 and the PCF entity 106 may identify whether the T-NG-RAN supports the L4S service based on the L4S service support-related information received from the T-NG-RAN. For example, if T-NG-RAN does not support L4S services, the SMF entity 105 and the PCF entity 106 may perform an SM policy association modification procedure to transmit an ECN marking request or congestion information for requesting ECN marking in the QNC message to the SMF entity 105 when congestion occurs through QoS profile update.

When congestion occurs after the UE 101 performs handover, e.g., the UE 101 moves to the T-NG-RAN, the T-NG-RAN may transmit a QNC message including "Request ECN marking" or "Congestion info" to the SMF entity 105 through the AMF entity 103.

The SMF entity 105 that receives a QNC message including "Request ECN marking" or "Congestion info" from the T-NG-RAN through the AMF entity 103 may know that T-NG-RAN does not support L4S services based on the received QNC message, and thus may transfer "Request ECN marking" or "Congestion info" to the UPF entity 104 through an N4 modification procedure.

The UPF entity 104 that receives "Request ECN marking" or "Congestion info" through the N4 modification procedure may request ECN marking on uplink packets and transfer the uplink packet for which ECN marking is requested to the AS 200 to notify the AS 200 of congestion.

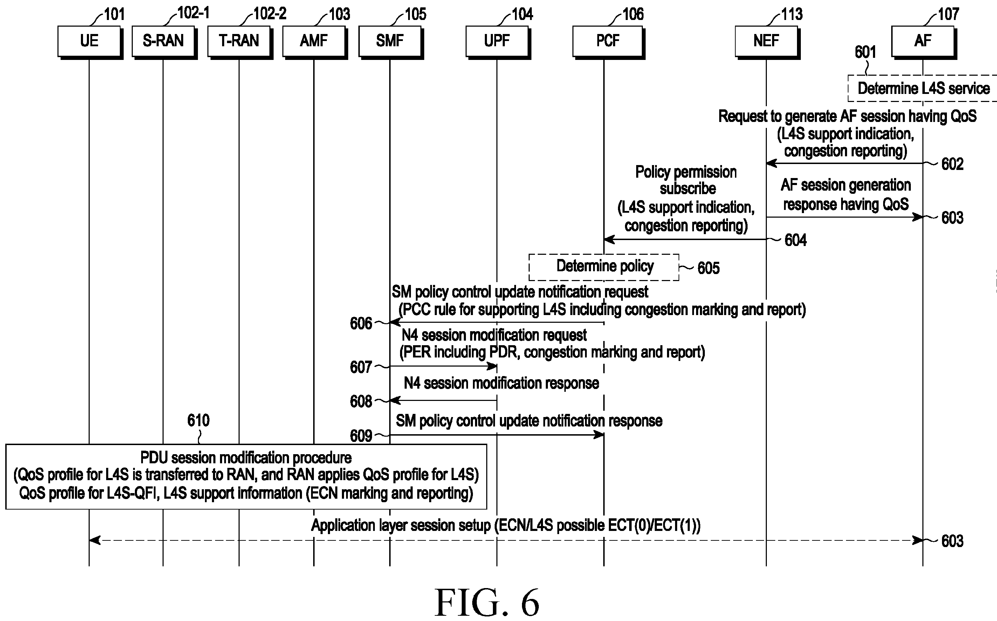

In order to describe detailed operations of the disclosure, the procedure of FIG. 6 is described step by step.

FIG. 6 is a view illustrating an L4S service setup step between a UE and AS and 5G core network and reflecting a policy for L4S/ECN marking to a UPF entity and a RAN through a policy update step for L4S support information and related requirements and transferring L4S support information and related requirements from an AF entity to a PCF entity for an L4S service in a communication system according to an embodiment of the disclosure.

Referring to FIG. 6, in step 601, it is possible to determine a request of the AF entity 107 for an L4S service. In this case, the AF entity 107 may know in advance whether L4S/ECN is supported in the backhaul connection network between the data center where the AF entity 107 is present, and the operator network, and in the operator network for its own network deployment or pre-agreement with the operator. The AF entity 107 may know in advance whether the L4S or ECN function is supported through a TCP connection procedure between the UE (or terminal) 101 and the application operator network. The application service operator may determine whether classic ECN or L4S is supported on the 5G network and the router passing through the path between the UE UE1 and the application server in the process of establishing the transport layer or application layer session between the UE 101 and the application server. For example, if UE1 delivers a TCP SYN packet for the establishment of a TCP session, the TCP SYN packet reaches the AS via the RAN and UPF of the 5G network and routers. The value of the ECN field of the TOS field of the IP header of the TCP SYN packet sent by the UE may be marked and transferred as ECT(0) when the UE supports Classic ECN, and ECT(1) when L4S is supported. If there is a router that does not support ECN or L4S among routers through which TCP packets pass between the UE and AS, the intermediate router may reset the ECN value to No ECT support and transfer it. Along the path, the AS receiving the TCP SYN packet may know whether ECN/L4S is supported on the path with the UE.

As described above, it is assumed that the application service operator may know in advance whether ECN/L4S is supported in the 5G network managed by the mobile communication service operator, and whether ECN/L4S is supported in the intermediate backhaul network may be known through the agreement or through the method described above.

When the application service operator knows whether ECN/L4S is supported in the backhaul network through step 601, the AF entity 107 may send a request for an AF session request including QoS-related parameters to the 5G network through steps 602 and 603 for the following purposes. When the application service operator represented by the AF entity wants to utilize the congestion control function using ECN marking in the L4S service, information for congestion control may be transferred to the PCF entity 106 through the NEF entity 113. The AF entity 107 may request support (L4S supported indication) of the L4S service in the 5G network for an IP flow used or intended to be used by the application service operator. The 5G network receiving the L4S request may manage traffic with a QoS flow that provides separate an L4S function for the requested traffic, and perform a function of transmitting traffic to a separate QoS flow that provides low latency, low loss, and scalable throughput. The AF entity 107 may provide information capable of distinguishing the corresponding traffic or service requesting L4S support. When the AF entity 107 requests L4S support so that the corresponding traffic experiences congestion in the 5G network, it requests to perform a marking function of experiencing congestion in the ECN bit of the TOS field of the IP header. When congestion occurs, the AF entity 107 may request L4S ECN marking that follows the L4S standard or may request marking that performs an operation consistent with the Classic ECN.

Further, when congestion occurs, the AF entity 107 may request an event and related reporting or notification about the occurrence of congestion. When an event for congestion information occurs, an operation for reporting the event is triggered, and the SMF entity 105 notifies the PCF entity 106 of this, and the AF entity 107 may receive the occurrence of the congestion information event and related information through the PCF entity 106.

The reporting request message of the AF entity 107 may include an indicator requesting a congestion report and parameters associated therewith. The parameter associated with the congestion report may designate conditions for the congestion report. The parameter associated with the congestion reporting may include a type of congestion reporting and a congestion reporting method. Conditions for congestion reporting include a threshold for the congestion level (when exceeding a predetermined level of bandwidth criterion before congestion occurs, or the data throughput of the queue buffer) or the level of congestion occurrence (percentage (e.g., 0 to 20% or 20 to 40%) of how more data has been transmitted relative to the guaranteed flow bit rate (GRBR)). When the congestion level threshold is included in the congestion reporting condition, and the congestion occurring in the 5G system is the threshold or more or exceeds the threshold, congestion is reported at the reporting address of the AF entity 107 that has requested reporting thereof.

In step 604, the NEF entity 113 may perform the following procedure after receiving the request information including the L4S support request, the congestion reporting request, or the like from the AF entity 107 in step 602 through the policy approval request process to the PCF entity 106.

The NEF entity 113 may identify subscriber information about a request to the AF entity 107 from the UDM entity. When the subscriber information included in the AF request is a generic public subscription identifier (GPSI), the NEF entity 113 may request a substitution with subscription permanent identifier (SUPI) information for indicating the subscriber inside the 5GC network. When the subscriber information included in the AF request is subscriber group information, the NEF entity 113 may request to replace the subscriber group information with the group identifier inside the 5G network. When the subscriber information included in the AF request is subscriber group information and may be substituted with a list of a plurality of subscriber information, the NEF entity 113 may request such substitution through the UDM entity.

The NEF entity 113 may perform an approval request for an AF request to the UDM entity to identify whether the AF identifier, information about the service requested by the AF entity 107, and subscriber information meet the subscription policy of the operator. The NEF entity 113 transfers a policy approval request to the PCF entity 106. The policy approval subscription request message may include the following information.

In an embodiment, the policy approval subscription request message may include a congestion reporting request indicator, a congestion reporting level threshold, and a congestion reporting type. The congestion reporting type may include an indicator indicating a report of a congestion occurrence when a congestion circumstance occurs. Congestion occurrence statistics information may be requested. The congestion occurrence statistics information may include information about a period when the congestion level occurs during a period when the congestion occurrence is monitored. Alternatively, it may include information such as the number of congestions during the congestion occurrence monitoring period, the frequency of congestion occurring during the unit period, and a period when congestion occurs above a designated congestion level during the monitoring period.

In step 605, the PCF entity 106 may determine the L4S/ECN congestion control policy based on the request received by the AF entity 107. When the PCF entity 106 determines the provision of the L4S/ECN service according to the operator policy, the PCF entity 106 may perform the SM policy control update notification procedure. The PCF entity 106 may include L4S/ECN-related policy and charging control (PCC) rules in the SMF policy control update notification request message and transfer the same to the SMF entity 105. The L4S/ECN-related PCC rule may include the following information. The service data flow information SDF is information capable of identifying a service flow to which the L4S/ECN is to be applied. It may be represented as a service data flow template. It may be represented as an IP source/destination address or range, an originating/receiving port number or range. Alternatively, it may be represented as a value of a fully qualified domain name (FQDN) or an FQDN range, e.g., a range of FQDN represented in a regular expression method.

The L4S/ECN marking-related information may include an L4S/ECN marking policy and an L4S/ECN congestion experience bit marking policy. The L4S/ECN marking policy may have a policy including whether L4S/ECN marking is supported, L4S/ECN marking version, and L4S/ECN marking support using information from the control plane.

As described above, in addition to the method of transferring congestion experience information through the ECN marking on IP packet through the user plane, it is also possible to support the conventional IP packet-based congestion control function on user plane by transferring, to the network entity (e.g., the UPF entity 104) supporting ECN marking through the SMF entity 105 based on congestion experience information (e.g., QNC message in the QoS profile or separate congestion info (e.g., congestion level threshold information)) received on the control plane from the network entity (e.g., RAN) where congestion occurs as in the disclosure. The L4S/ECN congestion reporting-related policy information generated by the network entity where congestion occurs may include an indicator requesting congestion reporting and parameters related thereto. Parameters associated with congestion reporting may specify conditions for congestion reporting. The condition of the congestion reporting may include a threshold of the congestion level. When the congestion level threshold is included in the congestion reporting conditions, the present embodiments 106 may monitor that the congestion level is the threshold or more or whether congestion occurs in the user plane from the UPF entity 104 or the RAN or the SMF entity 105 itself to the SMF entity 105 and, when the congestion level is the threshold or more or exceeds the threshold, perform a reporting procedure for the congestion experience to the PCF entity 106 or at the notification address designated by the PCF entity 106. The congestion reporting-related parameter may include a reporting type or a reporting method for congestion reporting when congestion occurs. The type of congestion reporting may be a one-time reporting or continuous reporting. In the case of continuous reporting type, reporting may be requested when congestion occurs, when the congestion level is a predetermined level (or congestion level threshold) or more, or when a predetermined level or more of congestion lasts for a designated period. As described above, additional parameters such as a congestion level threshold and a congestion duration may be further set according to the congestion reporting type. In the case of continuous reporting type, a final time to report on a congestion circumstance or a time to detect congestion reporting from the current time may be additionally designated. The congestion reporting-related parameter may include congestion reporting target UE information for congestion reporting, UE group-related information for congestion reporting target, congestion reporting target service and target traffic type information, and congestion reporting address.

In the disclosure, when the network entity changed as the UE 101 moves (e.g., changing from the source RAN (S-RAN) 102-1) to the target RAN (T-RAN) 102-2) does not L4S/ECN marking, the function of letting known through signaling on the control plane so that the SMF entity 105 may inform the UPF entity 104 of the same to perform L4S/ECN marking instead may be included in the PCC policy information and transferred to the SMF entity 105. For example, as the UE 101 moves, the UE 101 using the service from the source-RAN 102-1 supporting the existing L4S/ECN marking may move to the target-RAN 102-2 that does not support L4S/ECN marking during the handover process. In this case, the SMF entity 105 receiving the information "L4S/ECN marking is not supported (e.g., "L4S cannot be supported" in QNC or in N2 message)" for congestion control in the target-RAN 102-2 may send a request for congestion reporting to the RAN on the control plane according to the service or network operator's policy. After moving to the target-RAN 102-2, when congestion occurs, the congestion reporting information including the congestion circumstance information may be transferred from the target-RAN 102-2 to the SMF entity 105, and the SMF entity 105 may receive the same and perform a policy update to perform L4S/ECN marking based on the congestion circumstance information in the UPF entity 104 through an N4 session change request. In the conventional technology, if congestion occurs in each network entity, L4S/ECN marking is performed according to whether the network entity supports L4S/ECN marking or according to the service operator's request but, in the disclosure, based on the reporting information from the network entity (RAN) not supporting L4S/ECN marking through a separate policy update, the SMF entity 105 may allow a network entity (e.g., the UPF entity 104) supporting L4S/ECN marking to perform L4S/ECN marking instead based on the reporting information received on the control plane.

In step 606, the PCF entity 106 transfers the congestion policy and reporting-related policy determined through step 605 to the SMF entity 105. The SMF entity 105 receiving the congestion-related policy and congestion reporting policy determines the content of the congestion-related QoS profile to be transferred to the RAN. A PDU session modification procedure is initiated. (Step 610) The SMF entity 105 generates an N4 rule according to the congestion-related policy and the congestion reporting policy in the UPF entity 104 and performs a procedure of updating it to the UPF entity 104. (Steps 607 to 608)

In steps 607 to 608, the SMF entity 105 may transfer an L4S/ECN-related N4 rule associated with a QoS enforcement rule (QER) to the UPF entity 104 in units of QoS flow. The L4S/ECN-related N4 rule associated with the QER may determine the L4S/ECN marking control code as follows and transfer it to the UPF entity 104.

The L4S/ECN marking control code may have the following values. The resetting ECN marking control code may reset ECN bits with respect to the flow entering a QoS flow matched to the QFI. Further, if congestion information (congestion info) is received from the SMF entity 105 according to the N4 rule after the reset is performed, the CE bit is marked. The Classic ECN marking control code marks packets marked with ECT(0) as CE bits when a congestion level or more of congestion occurs. The L4S marking control code marks IP packets marked with ECT(1), with CE bits when the congestion level or more of congestion occurs. The Bypass ECN marking control code delivers the ECN marked content without changing it.

Together with the L4S/ECN marking control code, the SMF entity 105 may further include congestion reporting information, including the congestion level threshold or congestion occurrence information for CE bit marking, to the UPF entity 104. The congestion level threshold is the threshold of the congestion level for performing CE bit marking when the ECN marking control code is classic ECN marking or L4S marking. L4S marking and class ECN marking may have separate values, respectively. The SMF entity 105 may transfer whether congestion occurs to the UPF entity 104 based on congestion reporting information including the congestion level threshold or congestion information.

When the QoS flow-related N4 rule includes L4S/ECN-related N4 rule, and the marking control code includes the content supporting the classic ECN marking or L4S marking, the UPF entity 104 may receive the congestion information including whether there is RAN congestion or the RAN congestion level from the RAN and consider the same to determine whether there is congestion. Further, when the QoS flow-related N4 rule includes L4S/ECN-related N4 rule, and the marking control code includes the content supporting the classic ECN marking or L4S marking or resetting ECN marking, the UPF entity 104 may receive the congestion information including whether there is RAN congestion or the RAN congestion level from the SMF entity 105 through the control plane and consider the same to determine whether there is congestion and perform ECN marking. The UPF entity 104 may manage a separate queue for forwarding packets from the UPF entity 104, the queue may be managed for each QoS flow, and the presence of congestion or congestion level may be determined from internal settings related to the internal implementation of the UPF entity 104 or operator's settings or information preconfigured from the SMF entity 105.

The module for detecting congestion in the UPF entity 104 may manage resources for the module for processing the protocol or resources for buffering the QoS flow or packets corresponding thereto so that the UPF entity 104 may determine whether there is congestion when transmitting packets processed for each QoS flow.

The UPF entity 104 may use the congestion level predefined to determine congestion for the QoS flow or buffering resources. The congestion level may determine the congestion level in various methods from a combination of thresholds for the QoS flow of the UE 101 or resources corresponding thereto, and the computing resources for processing the protocol enumerated above.

The UPF entity 104 operates as follows, according to the ECN field value in the TOS field included in the IP header and the congestion control L4S/ECN marking control code received from the SMF entity 105, and whether there is congestion. When the congestion control L4S/ECN marking control code value is "Reset ECN", the ECN value is set to 00 (No ECT) and transferred. If the value is "Reset ECN" and the congestion control information (e.g., Congestion info) transferred from the control plane is transferred to the UPF entity 104 according to a separate L4S/ECN control rule, the UPF entity 104 may perform L4S/ECN marking using the information. If the congestion control L4S/ECN marking control code value is "bypass", the ECN value is not identified and transferred as it is. When the congestion control profile is bypass, it may operate in the same manner even when there is no congestion control profile. If the congestion control L4S/ECN marking control code value is L4S marking, if the ECN value of the arriving IP header is ECT(1) capable, and the congestion level is larger than the threshold of the designated congestion level or the predefined congestion level, two ECN bits are reset to CE bits (i.e., marked as CE bits), otherwise the ECT(1) value is maintained as it is. If the congestion control L4S/ECN marking control code value is classic ECN marking, if the ECN value of the arriving IP header is ECT(0) capable, and the congestion level is larger than the threshold of the designated congestion level or the predefined congestion level, two ECN bits are reset to CE bits (i.e., marked as CE bits), otherwise the ECT(0) value is maintained as it is.

If the SMF entity 105 receives congestion reporting-related policy information in the PCC rule, the SMF entity 105 may transfer a QoS profile including congestion experience reporting information to the RAN to report the congestion experience. If the SMF entity 105 receives congestion reporting-related policy information in the PCC rule, the SMF entity 105 may generate an N4 rule for congestion experience reporting to the UPF entity 104 to report the congestion experience and transfer it to the UPF entity 104. The congestion reporting N4 rule transferred by the SMF entity 105 to the UPF entity 104 may include information such as the congestion status change reporting request, the congestion experience reporting request, the periodic report of the congestion status, the address for receiving the congestion experience report, the congestion status change reporting request, and the congestion status report information-based ECN marking request.

In step 609, the SMF entity 105 transmits a response message to the SM policy control update notification request received in step 6 by the PCF entity 106.

In step 610. The SMF entity 105 performs a PDU session update procedure on the base station. During the PDU session update procedure, the SMF entity 105 transfers a QoS profile to the RAN and, in the QoS profile, transfers an ECN/L4S congestion control profile. The ECN/L4S congestion control profile may include QFI, 5QI, and RAN congestion-related L4S marking support profile. The RAN congestion-related L4S marking support profile , the L4S/ECN marking policy received through the PCF entity 106 in step 605, L4S/ECN ECN marking flow direction, congestion reporting method and information through the control plane (e.g., Congestion info QNC or N2 message), information for determining the congestion level such as congestion level threshold, congestion marking method when congestion occurs (e.g. Direct (RAN performs ECN marking) or indirect (UPF performs ECN marking by using congestion status report including congestion info via the control plane) the module detecting UL congestion in the RAN determines whether there is congestion of resources for the module processing RLC/PDCP/IP/GTP protocols and radio resources that may be allocated to the logical channel corresponding to the QoS flow or the QoS flow of the UE 101 and information from the UE 101 as follows.

To determine the congestion status, the information that may be received from the UE 101 may correspond to the buffer status report of the UE 101, channel quality index (CQI) report of the UE 101, or measurement report for the radio channel status of the UE 101. The module that detects congestion in the UE 101 may be a radio resource scheduler that performs a function of allocating a radio resource for an uplink. In order to determine congestion for an uplink QoS flow or the corresponding logical channel in the RAN, a predefined congestion level may be used. The congestion level may be determined in various ways from the combination of thresholds for radio resources and protocolprocessing computing resources for the QoS flow of the UE 101 listed above or the corresponding logical channel.

If the RAN determines congestion for uplink, the congestion information is transferred to the module that processes the protocol in the RAN, and the module that processes the protocol interprets the corresponding IP header. It may operate according to the ECN field value in the TOS field of the IP header, the RAN congestion-related L4S marking support profile, whether there is congestion, and the ECN value in the arriving IP header.

In step 611, settings for the L4S service may be completed, such as L4S/ECN marking between network entities, UE application, and application server through the above-described step.

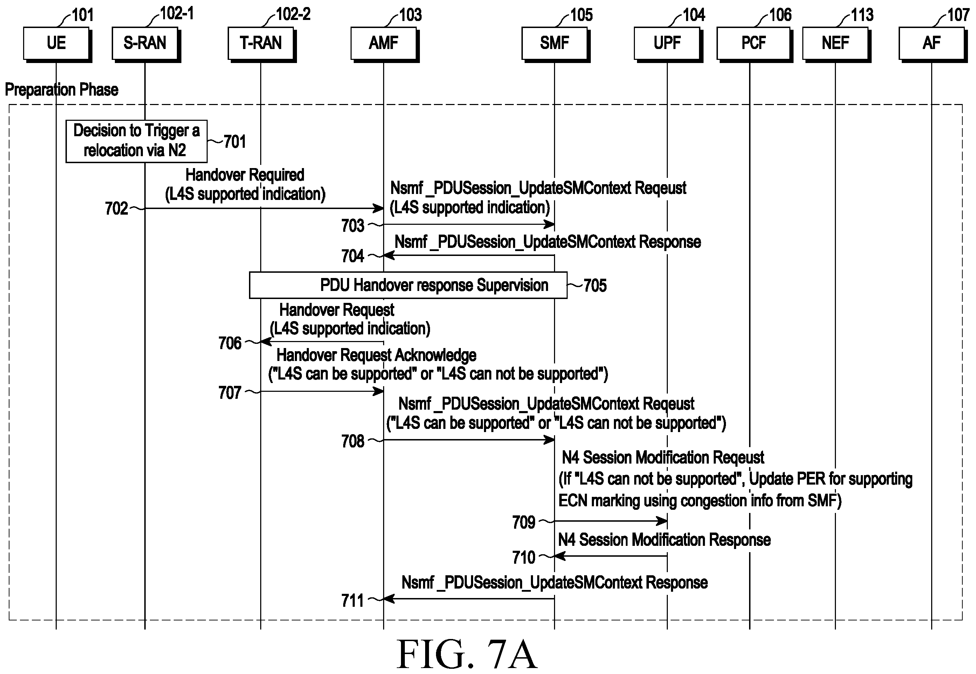

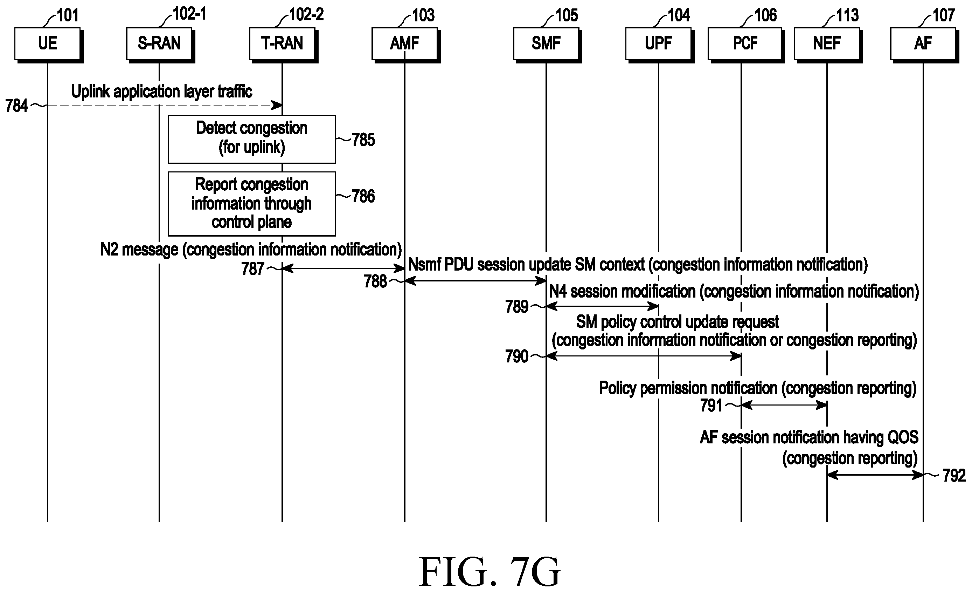

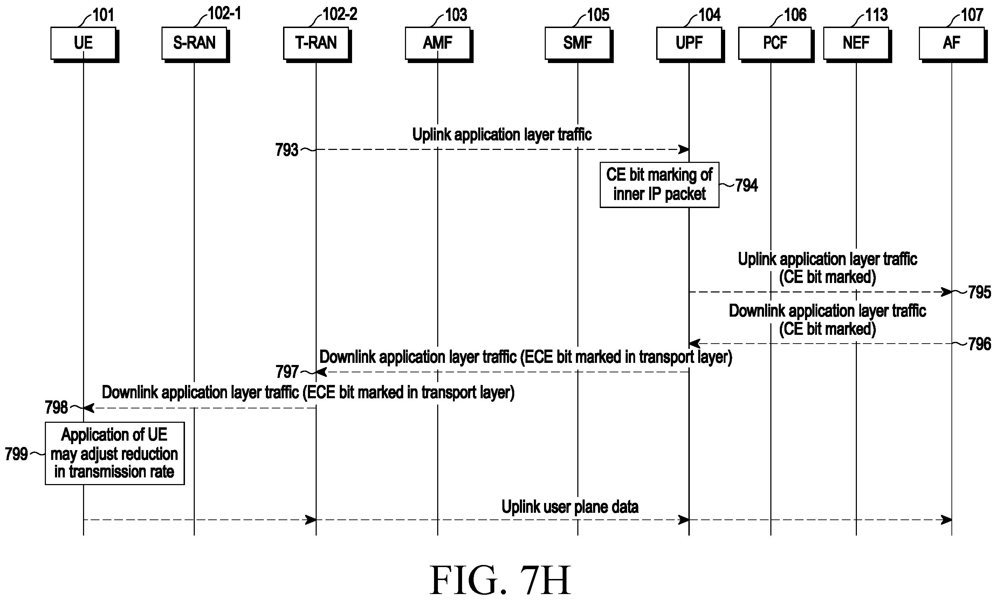

FIG. 7A is a signal flowchart schematically illustrating operations of a handover preparation step in a handover method between N2-based NG-RANs according to a movement of a UE in a communication system according to an embodiment of the disclosure.

Referring to FIG. 7A, the source-RAN determines an N2-based handover in step 701. In step 702, the source-RAN 102-1 may transmit a handover required message including, e.g., the source to target transparent container including NG-RAN-related information generated in the source-RAN and used in the target-RAN 102-2 and the PDU session ID information (PDU session IDs) to the AF entity 103 and, in this case, the handover required message may include the L4S/ECN marking information function (L4S/ECN supported indication) or L4S support indicator (L4S supported indication) indicating whether an L4S service is supported.

In step 703, the AMF entity 103 transfers handover request-related information to the SMF entity 105 based on the information received from the source-RAN. Based on the session management N2 information (SMN2 information) and the PDU session single network slice support information (S-NSSAI) that may be supported by the AMF entity 103, the PDU session management update request information including the PDU session IDs of the PDU session candidates is transmitted. In this case, the PDU session management update information may include the L4S/ECN marking information function (L4S/ECN supported indication) or an L4S support indicator (L4S supported indication) indicating whether the L4S service is supported among the state information about the source-RAN received in step 702. The SMF entity 105 may determine whether to allow the N2 handover of the PDU session based on the handover request information received in step 703. Further, the SMF entity 105 may allocate a new UPF if it falls outside the service area of the UPF entity 104 connected to the NG-RAN according to the movement of the UE 101.

In step 704, the SMF entity 105 transfers to the AMF entity 103 a response to the N2 handover request and related information based on the N2 handover request information requested in step 703. In this case, the PDU session-related session management update information response message may include N3 tunnel information such as N3 user plane address, QoS parameter and information for supporting L4S/ECN marking information (L4S/ECN marking information function (L4S/ECN supported indication) or L4S support indicator (L4S supported indication) indicating whether the L4S service is supported).

In step 705, the AMF entity 103 waits for the response message of each SMF entity based on the minimum delay time among the maximum delay times of the sessions, for the PDU session-related session management update response information about the associated SMF entities and continues to perform the N2 handover process.

In step 706, the AMF entity 103 delivers, to the target-RAN 102-2, a handover required message including the information received from the source-RAN 102-1 in step 702, PDU session-related information received from the SMF entity 105 in step 704, and N3 tunnel information for UPF connection. In this case, the handover required message may include information for supporting the L4S/ECN marking information received from the source-RAN 102-1 (L4S/ECN marking information function (L4S/ECN supported indication) or L4S support indicator (L4S supported indication) indicating whether the L4S service is supported) or, if the source-RAN does not provide the corresponding information, L4S-related information through the N2 session management information (N2 SM info) including the related PDU session information in the SMF entity 105. The N2 session management information received from the SMF entity 105 through step 704 may include handover-allowed PDU session-related information, and the information may include QoS profile information. The QoS profile denotes a QoS profile including congestion experience reporting information in the RAN transferred to the SMF entity 105 through the PCF entity 106 during the L4S service-related request session update process received through step 608 in FIG. 6. When the QoS profile transferred to the SMF entity 105 does not include the congestion experience reporting information in the RAN, the RAN may perform congestion experience reporting using the control plane to the SMF entity 105.

In step 707, the T-RAN receiving the handover-related request information through step 706 transfers a handover request-related acknowledge response message. In this case, the handover request-related acknowledge response message may include information about whether L4S is supported ("L4S/ECN can be supported" or "L4S/ECN cannot be supported") of the target-RAN 102-2. If the target-RAN 102-2 does not support L4S ("L4S/ECN cannot be supported") but the QoS profile in the N2 session management information of 706 includes RAN congestion experience reporting information, the target-RAN 102-2 transfers congestion experience reporting information including congestion information when congestion occurs to the SMF entity 105. The congestion experience reporting information in the RAN is transferred from the SMF entity 105 to the RAN through the QoS profile and, if a congestion experience occurs, congestion-related information (e.g., directivity, congestion level information, congestion experience reporting information recipient) is operated through the settings in the QoS profile regardless of whether the RAN supports L4S/ECN marking to the SMF entity 105 through the control plane.

In step 708, the AF entity 103 may transfer the handover request-related acknowledge response message including whether the RAN supports L4S/ECN marking, received through step 707, to the SMF entity 105.

In step 709, the SMF entity 105 may receive the PDU session-related management update information request message including whether L4S/ECN marking is supported transferred in step 708. In this case, the SMF entity 105 may check whether the RAN may report the congestion experience through the received QoS profile to the PCF entity 106 and whether, when transferring the congestion experience report to the SMF entity 105, the SMF entity 105 transfers the same to the UPF entity 104 through an N4 session modification request, and the UPF entity 104 receives a policy capable of performing L4S/ECN marking based thereupon. If the SMF entity 105 may receive the congestion experience report in the RAN, but it is transferred to the UPF entity 104, and a policy capable of L4S/ECN marking is not transferred to the UPF entity 104 based on congestion experience reporting information including, e.g., the congestion level information transferred on the control plane, the policy of performing L4S/ECN marking of the UPF entity 104 may be transferred based on the congestion information transferred on the control plane through the N4 session modification request of step 709 based on the information about whether the target-RAN 102-2 supports L4S received in steps 707 and 708 ("L4S/ECN can be supported" or "L4SECN cannot be supported"). Further, the target-RAN-related N3 tunnel information received in step 707 may be included and transferred in the N4 session modification request message. If the target-RAN 102-2 supports L4S/ECN marking based on the whether-L4S-is-supported information received from the target-RAN 102-2, the congestion-related information transferred to the SMF entity 105 transferred from the RAN on the control plane is not transferred to the UPF entity 104, and the L4S/ECN marking-related policy using control plane information may not be transferred to the UPF entity 104 either.

The SMF entity 105 may receive congestion experience reporting information when it is generated in the RAN and the UPF entity 104. The SMF entity 105 may determine, e.g., transmission information and directivity information of the congestion information transferred on the control plane and, when it is not the congestion information transferred from the RAN or the directivity information differs, treat it as an exception through, e.g., filtering settings not to perform L4S/ECN marking in the UPF entity 104 through the congestion information.

In step 710, the UPF entity 104 may transfer the response message to the N4 session modification request received through the SMF entity 105 in step 709. In step 711, the SMF entity 105 may transfer a PDU session-related session management update response message to the AF entity 103.

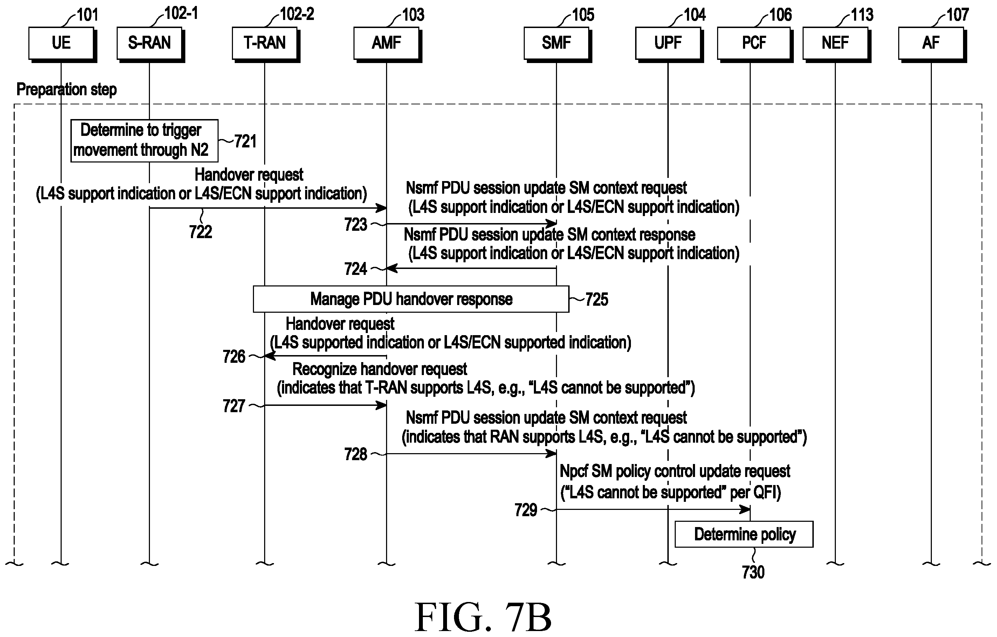

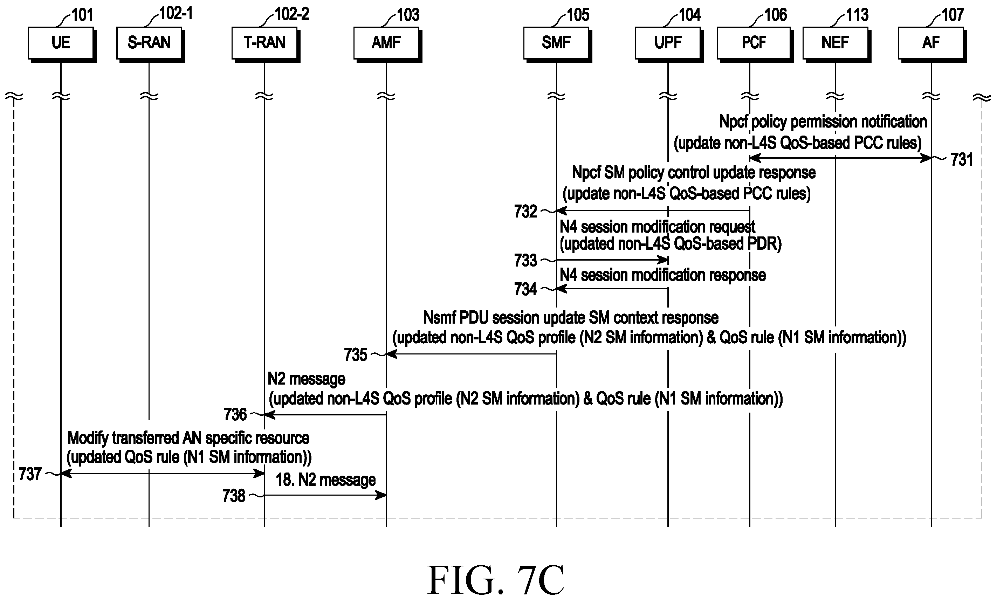

FIGS. 7B and 7C are signal flowcharts schematically illustrating operations of a handover preparation step in a handover method between N2-based NG-RANs according to a movement of a UE in a communication system according to an embodiment of the disclosure.

Referring to FIGS. 7B and 7C, the source-RAN determines an N2-based handover in step 721. In step 722, the source-RAN 102-1 may transmit a handover required message including, e.g., the source to target transparent container including NG-RAN-related information generated in the source-RAN and used in the target-RAN 102-2 and the PDU session ID information (PDU session IDs) to the AF entity 103 and, in this case, the handover required message may include the L4S/ECN marking information function (L4S/ECN supported indication) or L4S support indicator (L4S supported indication) indicating whether an L4S service is supported.

In step 723, the AMF entity 103 transfers handover request-related information to the SMF entity 105 based on the information received from the source-RAN. Based on the session management N2 information (SMN2 information) and the PDU session single network slice support information (S-NSSAI) that may be supported by the AMF entity 103, the PDU session management update request information including the PDU session IDs of the PDU session candidates is transmitted. In this case, the PDU session management update information may include the L4S/ECN marking information function (L4S/ECN supported indication) or an L4S support indicator (L4S supported indication) indicating whether the L4S service is supported among the state information about the source-RAN received in step 702. The SMF entity 105 may determine whether to allow the N2 handover of the PDU session based on the handover request information received in step 723. Further, the SMF entity 105 may allocate a new UPF if it falls outside the service area of the UPF entity 104 connected to the NG-RAN according to the movement of the UE 101.

In step 724, the SMF entity 105 transfers to the AMF entity 103 a response to the N2 handover request and related information based on the N2 handover request information requested in step 703. In this case, the PDU session-related session management update information response message may include N3 tunnel information such as N3 user plane address, QoS parameter and information for supporting L4S/ECN marking information (L4S/ECN marking information function (L4S/ECN supported indication) or L4S support indicator (L4S supported indication) indicating whether the L4S service is supported).

In step 725, the AMF entity 103 waits for the response message of each SMF entity based on the minimum delay time among the maximum delay times of the sessions, for the PDU session-related session management update response information about the associated SMF entities and continues to perform the N2 handover process.

In step 726, the AMF entity 103 delivers, to the target-RAN 102-2, a handover required message including the information received from the source-RAN 102-1 in step 722, PDU session-related information received from the SMF entity 105 in step 724, and N3 tunnel information for UPF connection. In this case, the handover required message may include information for supporting the L4S/ECN marking information received from the source-RAN 102-1 (L4S/ECN marking information function (L4S/ECN supported indication) or L4S support indicator (L4S supported indication) indicating whether the L4S service is supported) or, if the source-RAN does not provide the corresponding information, L4S-related information through the N2 session management information (N2 SM info) including the related PDU session information in the SMF entity 105. The N2 session management information received from the SMF entity 105 through step 724 may include handover-allowed PDU session-related information, and the information may include QoS profile information. When the QoS profile transferred to the SMF entity 105 does not include the congestion experience reporting information in the RAN, the RAN may perform congestion experience reporting using the control plane to the SMF entity 105.

In step 727, the T-RAN receiving the handover-related request information through step 726 transfers a handover request-related acknowledge response message. In this case, the handover request-related acknowledge response message may include information about whether L4S is supported (e.g., "L4S/ECN can be supported" or "L4S/ECN cannot be supported") of the target-RAN 102-2. In the present invention, when the congestion experience reporting information is not included and transferred to the RAN in the QoS profile in the N2 session management information transferred to the target-RAN 102-2 in step 726, and the target-RAN 102-2 does not support L4S, a session management rule-related information modification process may be performed to receive, through the PCF entity 106, a QoS flow information-based PCC rule that does not L4S for the L4S-based QoS flow information transferred to the SMF entity 105 by informing the SMF entity 105 of the same.

In step 728, the AF entity 103 may transfer the handover request-related acknowledge response message including whether the RAN supports L4S/ECN marking (e.g., "L4SECN can be supported" or "L4SECN cannot be supported"), received through step 727, to the SMF entity 105.

In step 729, if the target-RAN 102-2 does not support L4SECN marking and separate congestion marking reporting information is not set in, e.g., L4S-based QoS profile according to whether L4S marking is supported in the handover-related acknowledge response message received in step 728, the SMF entity 105 may transfer, to the PCF entity 106, the QoS flow information (e.g., "L4S cannot be supported" per QFI) not supporting L4S.

In step 730, the PCF entity 106 may receive the QoS flow identifier not supporting L4S due to, e.g., not supporting L4S/ECN marking in the network entity (e.g., the target-RAN 102-2) received through the SMF entity 105 and, based thereupon, determine a policy to change the existing L4S-based QoS information (L4S dedicated QoS flow) into normal or default QoS flow information (non L4S QoS flow or default QoS flow) not supporting L4S.

In step 731, the PCF entity 106 may transfer the updated PCC rule based on the updated normal QoS or default QoS flow to the AF entity 107 and thereby inform the AF entity 107/AS that an operation for L4S service such as L4S/ECN marking is not supported through the corresponding session.

In step 732, the PCF entity 106 may transfer, to the SMF entity 105, the PCC rule (non L4S QoS flow based PCC rule) updated based on the normal QoS or default QoS flow not supporting L4S determined through step 730.

In step 733, the packet detection rule (PDR) of the UPF entity 104 may be updated based on the PCC rule (non L4S QoS flow based PCC rule) updated based on the normal QoS or default QoS flow not supporting L4S based on the updated PCC rule received through step 732 through the N4 session modification process through step 734.

In step 735, the SMF entity 105 may transfer, to the AF entity 103 through the N1 and N2 session management information, the QoS profile (non L4S QoS profile) and QoS rule (non L4S QoS rule) based on the PCC rule (non L4S QoS flow based PCC rule) updated based on the normal QoS or default QoS flow not supporting L4S.

In step 736, the AF entity 103 may include the updated QoS profile (non L4S QoS profile) and QoS rule (non L4S QoS rule) received in step 735 in the N1 and N2 session management information, respectively, and transfer the same to the target-RAN 102-2 through an N2 message.

In step 737, the target-RAN 102-2 may include the updated QoS rule in the N1 session management information and transfer the same to the UE 101.

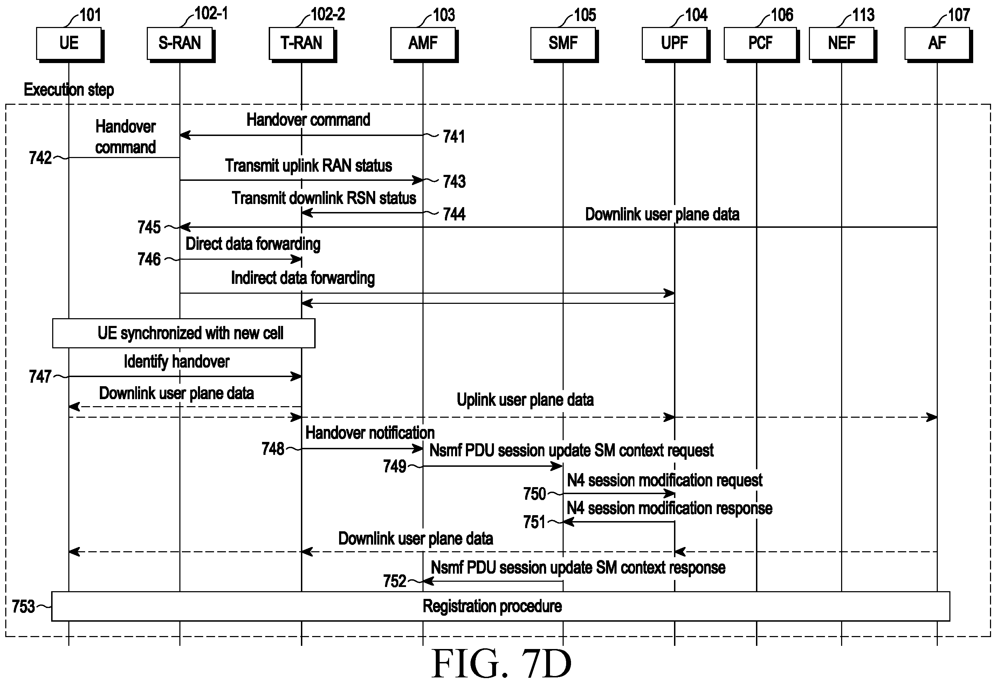

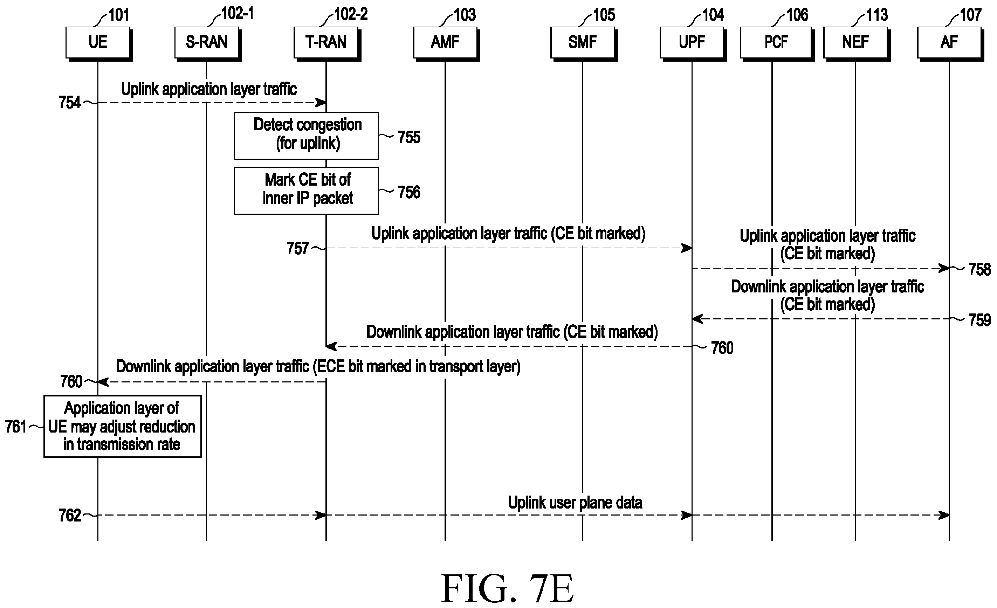

FIGS. 7D and 7E are signal flowcharts schematically illustrating operations when a congestion occurs after handover is executed as a UE moves in a communication system according to an embodiment of the disclosure.

The operations illustrated in FIGS. 7D and 7E may represent operations when congestion occurs after handover from the source-RAN 102-1 to the target-RAN 102-2 after a handover preparation process according to a movement of the UE in FIG. 7A.

Referring to FIGS. 7D and 7E, steps 741 to 753 may represent a handover execution process in the UE. Through this execution process, the data forwarding method from the source-RAN 102-1 to the target-RAN 102-2 and the information about the source-RAN are moved to the target-RAN 102-2 in advance through the handover preparation process from step 701 to step 711, and after the handover preparation is completed through the exchange process of N3 tunnel information for the connection between the UPF entity 104 and the target-RAN 102-2, the downlink data of the source-RAN 102-1 is transmitted to the target-RAN 102-2 (steps 746 and 747) and then the handover process may be completed.

As in step 754, the UE 101 may transmit uplink traffic in the application layer/transport layer program of the UE 101 using the target-RAN 102-2.

As illustrated in step 755, the target-RAN 102-2 may detect congestion for the uplink of the UE 101. The module that detects UL congestion in the RAN determines whether there is congestion in the radio resources that may be allocated the QoS flow of the UE 101 or the logical channel corresponding thereto and the information from the UE 101 as follows, and the resources for the module processing the RLC/PDCP/IP/GTP protocols.

To determine the congestion status, the information that may be received from the UE 101 may correspond to the buffer status report of the UE 101, channel quality index (CQI) report of the UE 101, or measurement report for the radio channel status of the UE 101. The module that detects congestion in the UE 101 may be a radio resource scheduler that performs a function of allocating a radio resource for an uplink. In order to determine congestion for an uplink QoS flow or the corresponding logical channel in the RAN, a predefined congestion level may be used. The congestion level may be determined in various ways from the combination of thresholds for radio resources and protocolprocessing computing resources for the QoS flow of the UE 101 listed above or the corresponding logical channel.

In step 756, when congestion is detected, the RAN may perform the congestion experience bit marking operation based on the information received through the L4S-based QoS profile received in step 610 of FIG. 6. If the RAN determines congestion for uplink, the congestion information is transferred to the module that processes the protocol in the RAN, and the module that processes the protocol interprets the corresponding IP header and marks with CE bit (11). Alternatively, the level of congestion experienced by the RAN or whether there is congestion experience may be marked in the GTP header according to the operator's request and system setting.

In step 757, the RAN transfers uplink application layer traffic to the UPF entity 104. When the RAN experiences congestion as in procedure 14 for uplink application layer traffic transferred to the UPF entity 104, the CE bit may be marked in the ECN bit in the TOS field of the inner IP header. Alternatively, the level of congestion experienced by the RAN or whether there is congestion experience may be marked in the GTP header. The congestion level experienced by the RAN may be represented as information obtained by encoding the number of bits of an appropriate size capable of expressing the congestion level as an integer in the GTP header. Further, whether congestion is experienced may also be represented as one-bit information for indicating whether congestion is experienced or as 2 bits representing whether ECT is supported, ECT(0), ECT(1) and CE(11) like the ECN bit of the IP header.

If the UPF entity 104 receives uplink application layer traffic from the RAN, the UPF entity 104 may perform an L4S/ECN marking operation on the TOS field of the IP header of the inner IP packet.

The module for detecting congestion in the UPF entity 104 may manage resources for the module for processing the protocol or resources for buffering the QoS flow or packets corresponding thereto so that the UPF entity 104 may determine whether there is congestion when transmitting packets processed for each QoS flow.

The UPF entity 104 may use the congestion level predefined to determine congestion for the QoS flow or buffering resources. The congestion level may determine the congestion level in various methods from a combination of thresholds for the QoS flow of the UE 101 or resources corresponding thereto, and the computing resources for processing the protocol enumerated above.

The UPF entity 104 operates as follows, according to the ECN field value in the TOS field included in the IP header, or a value obtained by encoding whether there is congestion and the congestion level in the RAN in the GTP header added in the RAN, and the congestion control L4S/ECN marking control code received from the SMF entity 105, and whether there is congestion.

According to the congestion control L4S/ECN marking control code, whether there is congestion, and the ECN value in the arriving IP header, the following operations may be performed.

If the ECN value in the IP header arriving at the UPF entity 104 from the RAN is CE bit (11) representing congestion experience or the information indicating congestion experience in the GTP-U header indicates a value representing congestion experience, in step 758, the uplink application layer traffic transferred from the UPF entity 104 to the AS may, if experiencing congestion based on the information received from the RAN, be marked with the CE bit to the ECN bit in the TOS field of the inner IP header and be transmitted.

In step 759, the AS may include marking information of the CE bit in the ECN bit in the TOS field of the inner IP header of the downlink application layer traffic based on the marking information of the CE bit in the ECN bit in the TOS field of the inner IP header of the uplink application layer traffic received and transfer the congestion information generated when transmitting uplink application layer traffic to the UE 101.

In steps 760 and 761, the UPF entity 104 may transfer the downlink application layer traffic transferred from the AS to the target-RAN 102-2, and the target-RAN 102-2 may transfer the same to the UE101.

In step 762, the UE 101 may grasp whether congestion experience occurs when transmitting uplink application layer traffic based on the marking information of the CE bit in the ECN bit information in the TOS field of the inner IP header of the downlink application layer traffic received from the AS and, to reduce the same, reduce the data rate to adjust the uplink application layer traffic. The downlink traffic received in the UE 101 is transferred to the transport layer in the UE 101 via the IP layer in the UE 101. If traffic including the TCP header with the ECE bit set is transferred to the transport layer (e.g., TCP layer) in the UE 101, the transport layer of the UE 101 determines that congestion has occurred in the path from the UE 101 to the server. The transport layer of the UE 101 may detect that congestion has occurred for the uplink traffic and reduce the size of the congestion window of the transport layer or transmit a signal for indicating that congestion has occurred in the application layer. If the application layer receives a report indicating that congestion has occurred in the uplink from the transport layer, the application layer may perform an operation for reducing or adjusting the transmission rate in the application layer. For example, the application layer may change the code capable of generating a smaller amount of traffic. Thereafter, uplink application layer traffic may be transmitted based on the adjusted data rate value, and the L4S-based service may be used.

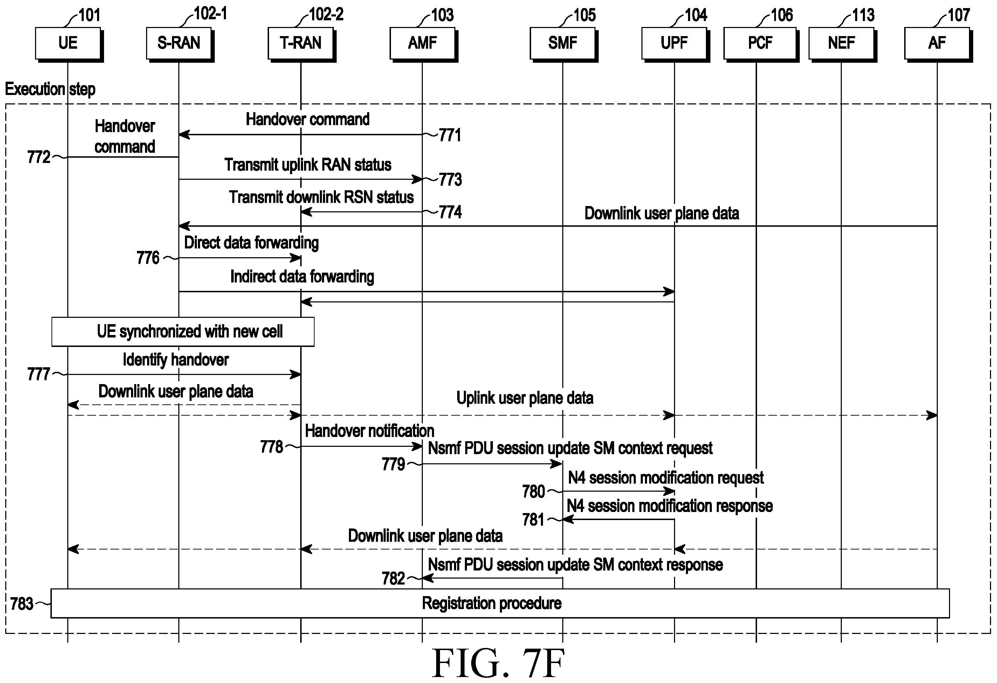

FIGS. 7F to 7H are signal flowcharts illustrating an operation in which when a congestion occurs after handover is executed as a UE moves in a communication system, congestion occurrence information is transferred to a UPF entity on a control plane to perform L4S/ECN marking according to an embodiment of the disclosure.

The operations illustrated in FIGS. 7F to 7H may represent operations of transferring congestion occurrence information on the control plane to perform L4S/ECN marking when congestion occurs after handover from the source-RAN 102-1 to the target-RAN 102-2 after a handover preparation process according to a movement of the UE in FIG. 7A.

Referring to FIGS. 7F to 7H, steps 771 to 783 may represent a handover execution process in the UE. Through this execution process, the data forwarding method from the source-RAN 102-1 to the target-RAN 102-2 and the information about the source-RAN are moved to the target-RAN 102-2 in advance through the handover preparation process from step 701 to step 711, and after the handover preparation is completed through the exchange process of N3 tunnel information for the connection between the UPF entity 104 and the target-RAN 102-2, the downlink data of the source-RAN 102-1 is transmitted to the target-RAN (steps 746 and 747) and then the handover process may be completed.

As in step 784, the UE 101 may transmit uplink traffic in the application layer/transport layer program of the UE 101 using the target-RAN 102-2.

As illustrated in step 785, the target-RAN 102-2 may detect congestion for the uplink of the UE 101. The module that detects UL congestion in the RAN determines whether there is congestion in the radio resources that may be allocated the QoS flow of the UE 101 or the logical channel corresponding thereto and the information from the UE 101 as follows, and the resources for the module processing the RLC/PDCP/IP/GTP protocols.

To determine the congestion status, the information that may be received from the UE 101 may correspond to the buffer status report of the UE 101, channel quality index (CQI) report of the UE 101, or measurement report for the radio channel status of the UE 101. The module that detects congestion in the UE 101 may be a radio resource scheduler that performs a function of allocating a radio resource for an uplink. In order to determine congestion for an uplink QoS flow or the corresponding logical channel in the RAN, a predefined congestion level may be used. The congestion level may be determined in various ways from the combination of thresholds for radio resources and protocolprocessing computing resources for the QoS flow of the UE 101 listed above or the corresponding logical channel.

In step 786, when congestion is detected, the RAN may perform the congestion experience reporting operation based on the information received through the L4S-based QoS profile received in step 610 of FIG. 6. In step 785, if the RAN determines congestion for uplink, when the RAN does not support L4S/ECN marking but supports to transfer congestion information through a congestion information reporting message on the control plane according to the congestion information transfer method experienced by the RAN in the QoS profile of the RAN, the RAN determines to generate a congestion information reporting message including the congestion information and then transfers the same to the SMF entity 105 via the AF entity 103 through steps 787 and 788 and, in step 789, the SMF entity 105 transfers the corresponding congestion information to the UPF entity 104 through the N4 session modification process, and the UPF entity 104 may perform CE bit marking in the ECN bit in the TOS field of the inner IP header of the uplink application layer traffic based on the UPF entity 104 operation L4SECN marking policy received in step 607 of FIG. 6 based on the received congestion information. If the policy information for L4S/ECN marking in the UPF entity 104 based on the congestion information of the RAN is not in the UPF entity 104, the SMF entity 105 may reflect the policy information for L4S/ECN marking through the N4 session modification process based on the congestion information in the UPF entity 104 using the PCC rule information received through the PCF entity 106.

In steps 790 to 792, the SMF entity 105 may transfer a congestion information reporting message including, e.g., the congestion level information received from the RAN to the AF entity 107 via the PCF entity 106 and the NEF entity 113.

In step 793, the RAN transfers uplink application layer traffic to the UPF entity 104. In step 794, if the UPF entity 104 receives uplink application layer traffic from the RAN, the UPF entity 104 may receive the congestion information transferred from the RAN through the SMF entity 105 through the congestion information reporting message on the control plane. Thereafter, the UPF entity 104 may perform an L4S/ECN marking operation on the TOS field of the IP header in the uplink application layer traffic from the UPF entity 104 to the AS based on the corresponding information.

Further, the module for detecting congestion in the UPF entity 104 may manage resources for the module for processing the protocol or resources for buffering the QoS flow or packets corresponding thereto so that the UPF entity 104 may determine whether there is congestion when transmitting packets processed for each QoS flow.

The UPF entity 104 may use the congestion level predefined to determine congestion for the QoS flow or buffering resources. The congestion level may determine the congestion level in various methods from a combination of thresholds for the QoS flow of the UE 101 or resources corresponding thereto, and the computing resources for processing the protocol enumerated above.

In step 795, the uplink application layer traffic transferred from the UPF entity 104 to the AS may be transmitted, with the CE bit marked in the ECN bit in the TOS field of the inner IP header based on the congestion occurrence information transferred on the control plane in the RAN.

In step 796, the AS may include marking information of the CE bit in the ECN bit in the TOS field of the inner IP header of the downlink application layer traffic based on the marking information of the CE bit in the ECN bit in the TOS field of the inner IP header of the uplink application layer traffic received and transfer the congestion information generated when transmitting uplink application layer traffic to the UE 101.

In steps 797 and 798, the UPF entity 104 may transfer the downlink application layer traffic transferred from the AS to the target-RAN 102-2, and the target-RAN 102-2 may transfer the same to the UE101.

In step 799, the UE 101 may grasp whether congestion experience occurs when transmitting uplink application layer traffic based on the marking information of the CE bit in the ECN bit information in the TOS field of the inner IP header of the downlink application layer traffic received from the AS and, to reduce the same, reduce the data rate to adjust the uplink application layer traffic. Thereafter, uplink application layer traffic may be transmitted based on the adjusted data rate value, and the L4S-based service may be used.

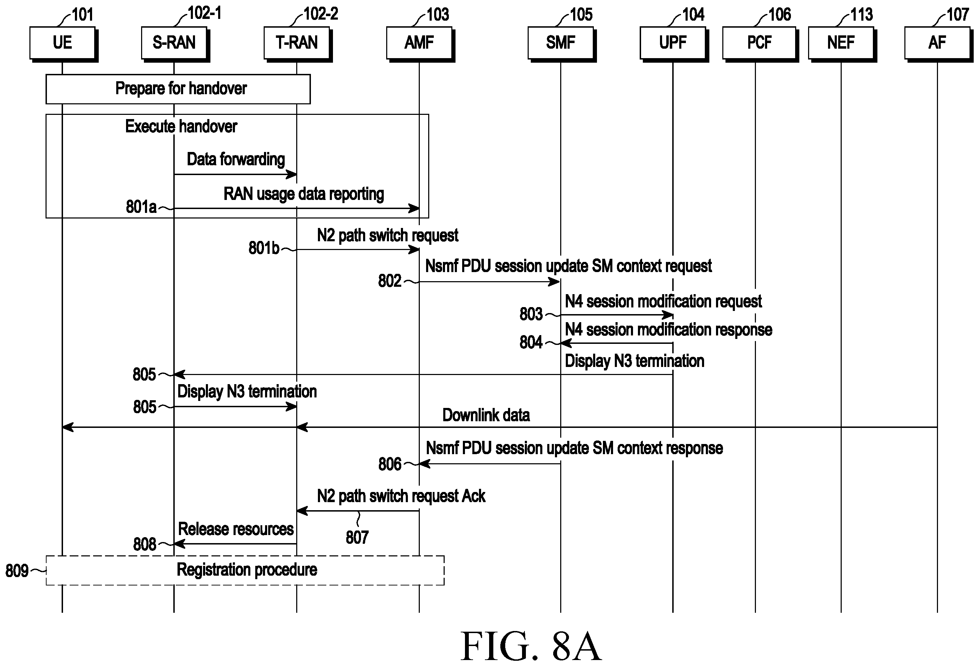

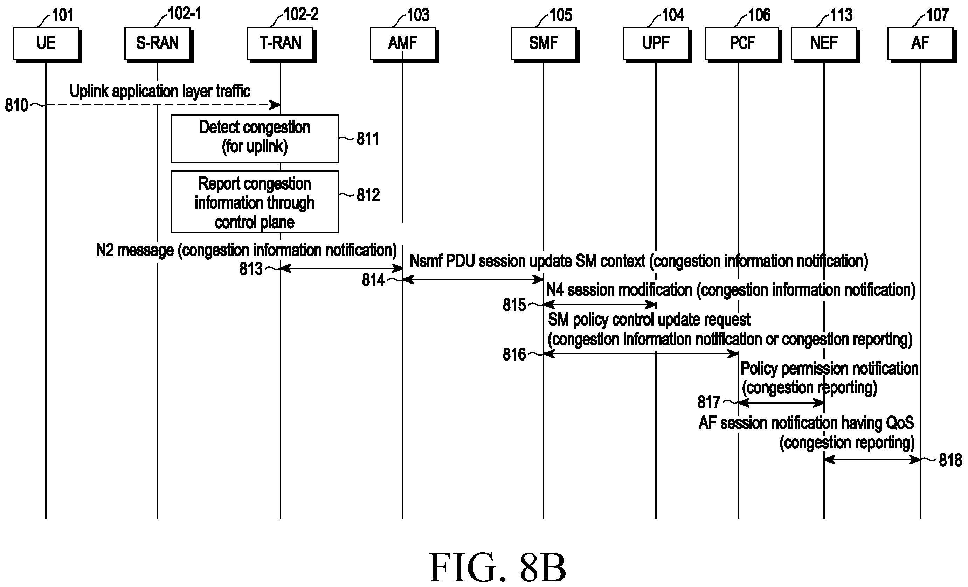

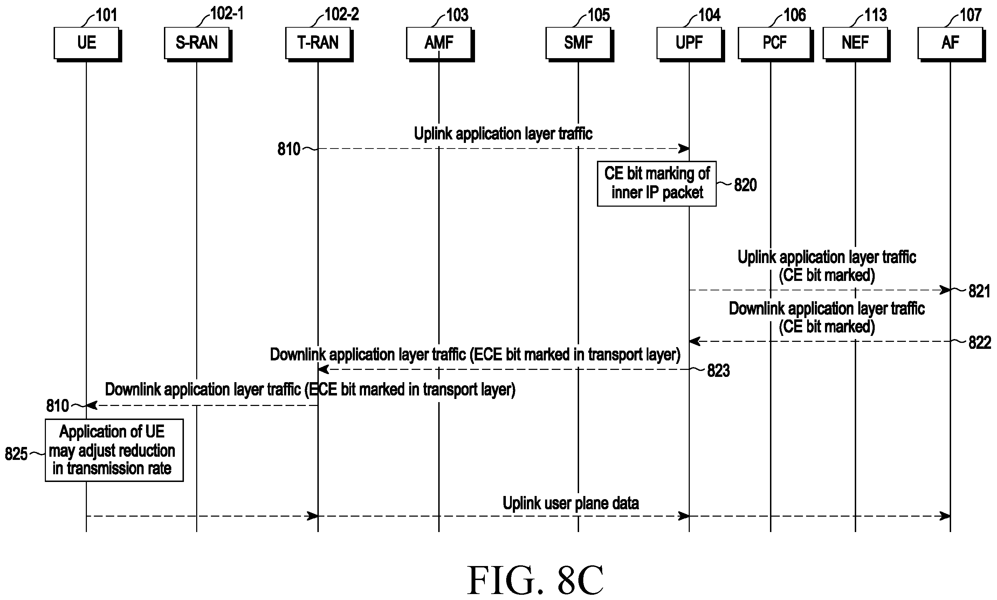

FIGS. 8A to 8C are signal flowcharts schematically illustrating an Xn-based handover process from a source-RAN to a target-RAN 102-2 as UE moves in a communication system according to an embodiment of the disclosure.

The source-RAN 102-1 receiving the L4S-based QoS profile including information about the congestion experience reporting operation in the RAN through step 610 in FIG. 6 may determine handover to the target-RAN 102-2 using the same AF entity 103 and SMF entity 105 and the UPF entity 104 as the UE 101 moves. In this case, data may be directly forwarded from the source-RAN 102-1 to the target-RAN 102-2 and, at this time, in step 801b, the target-RAN 102-2 receiving forwarded data from the source-RAN 102-1 may transmit an N2 path change request message to the AF entity 103 and include N3 tunnel information of the target-RAN 102-2 in the corresponding message.

In step 802, the AF entity 103 transfers, to the SMF entity 105, the content received for handover from the target-RAN 102-2 through the PDU session-related session management update request message.

In steps 803 and 804, the SMF entity 105 may make a separate connection between the target-RAN 102-2 and the UPF entity 104 if the target-RAN 102-2 and the source-RAN 102-1 are present in different IP bands based on the information of the target-RAN 102-2 through the N4 session modification request process in the UPF entity 104.

In step 805, an N3 end marker may be transmitted to the existing source-RAN 102-1 through one or more packets for each N3 tunnel, and the downlink data path may be changed to the target-RAN 102-2.

In step 806, the SMF entity 105 may include and transfer the updated CN PDB information of the PDU sessions to be handed over to the AF entity 103 through the PDU session-related session management update information response message.

Through step 807, the AF entity 103 may include information about the cause of success or failure in handover and transmit the same to the target-RAN 102-2 through an N2 path change request response message.

Through step 808, the target-RAN 102-2 may send a resource release message to the source-RAN 102-1, indicating that handover is completed.

As in step 810, the UE 101 may transmit uplink traffic in the application layer/transport layer program of the UE 101 using the target-RAN 102-2.

As illustrated in step 811, the target-RAN 102-2 may detect congestion for the uplink of the UE 101. The module that detects UL congestion in the RAN determines whether there is congestion in the radio resources that may be allocated the QoS flow of the UE 101 or the logical channel corresponding thereto and the information from the UE 101 as follows, and the resources for the module processing the RLC/PDCP/IP/GTP protocols.

To determine the congestion status, the information that may be received from the UE 101 may correspond to the buffer status report of the UE 101, channel quality index (CQI) report of the UE 101, or measurement report for the radio channel status of the UE 101. The module that detects congestion in the UE 101 may be a radio resource scheduler that performs a function of allocating a radio resource for an uplink. In order to determine congestion for an uplink QoS flow or the corresponding logical channel in the RAN, a predefined congestion level may be used. The congestion level may be determined in various ways from the combination of thresholds for radio resources and protocolprocessing computing resources for the QoS flow of the UE 101 listed above or the corresponding logical channel.

In step 812, when congestion is detected, the RAN may perform the congestion experience reporting operation based on the information received through the L4S-based QoS profile received in step 610 of FIG. 6. In step 811, if the RAN determines congestion for uplink, when the RAN does not support L4S/ECN marking but supports to transfer congestion information through a congestion information reporting message on the control plane according to the congestion information transfer method experienced by the RAN in the QoS profile of the RAN, the RAN determines to generate a congestion information reporting message including the congestion information and then transfers the same to the SMF entity 105 via the AF entity 103 through steps 813 and 814 and, in step 815, the SMF entity 105 transfers the corresponding congestion information to the UPF entity 104 through the N4 session modification process, and the UPF entity 104 may perform CE bit marking in the ECN bit in the TOS field of the inner IP header of the uplink application layer traffic based on the UPF entity 104 operation L4SECN marking policy received in step 607 of FIG. 6 based on the received congestion information. If the policy information for L4S/ECN marking in the UPF entity 104 based on the congestion information of the RAN is not in the UPF entity 104, the SMF entity 105 may reflect the policy information for L4S/ECN marking through the N4 session modification process based on the congestion information in the UPF entity 104 using the PCC rule information received through the PCF entity 106.

In steps 816 to 818, the SMF entity 105 may transfer a congestion information reporting message including, e.g., the congestion level information received from the RAN to the AF entity 107 via the PCF entity 106 and the NEF entity 113.

In step 819, the RAN transfers uplink application layer traffic to the UPF entity 104. If the UPF entity 104 receives uplink application layer traffic from the RAN, the UPF entity 104 may receive the congestion information transferred from the RAN through the SMF entity 105 through the congestion information reporting message on the control plane. Thereafter, in step 820, the UPF entity 104 may perform an L4S/ECN marking operation on the TOS field of the IP header in the uplink application layer traffic from the UPF entity 104 to the AS based on the corresponding information.

Further, the module for detecting congestion in the UPF entity 104 may manage resources for the module for processing the protocol or resources for buffering the QoS flow or packets corresponding thereto so that the UPF entity 104 may determine whether there is congestion when transmitting packets processed for each QoS flow.

The UPF entity 104 may use the congestion level predefined to determine congestion for the QoS flow or buffering resources. The congestion level may determine the congestion level in various methods from a combination of thresholds for the QoS flow of the UE 101 or resources corresponding thereto, and the computing resources for processing the protocol enumerated above.

In step 821, the uplink application layer traffic transferred from the UPF entity 104 to the AS may be transmitted, with the CE bit marked in the ECN bit in the TOS field of the inner IP header based on the congestion occurrence information transferred on the control plane in the RAN.

In step 822, the AS may include marking information of the CE bit in the ECN bit in the TOS field of the inner IP header of the downlink application layer traffic based on the marking information of the CE bit in the ECN bit in the TOS field of the inner IP header of the uplink application layer traffic received and transfer the congestion information generated when transmitting uplink application layer traffic to the UE 101.

In steps 823 and 824, the UPF entity 104 may transfer the downlink application layer traffic transferred from the AS to the target-RAN 102-2, and the target-RAN 102-2 may transfer the same to the UE101.

In step 825, the UE 101 may grasp whether congestion experience occurs when transmitting uplink application layer traffic based on the marking information of the CE bit in the ECN bit information in the TOS field of the inner IP header of the downlink application layer traffic received from the AS and, to reduce the same, reduce the data rate to adjust the uplink application layer traffic. Thereafter, uplink application layer traffic may be transmitted based on the adjusted data rate value, and the L4S-based service may be used.

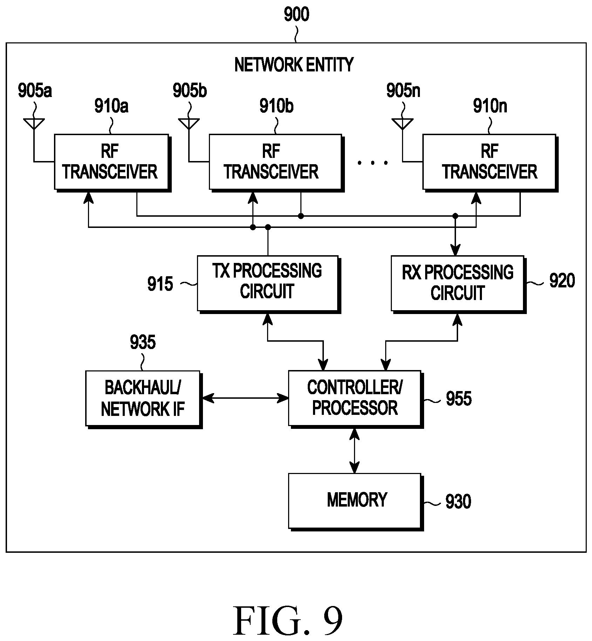

A structure of a network entity according to an embodiment of the disclosure is described below with reference to FIG. 9. A network entity (or network device (e.g., RAN node, AF entity, UDM entity, PCF entity, NRF entity, NEF entity, NSSF entity, AUSF entity, AMF entity, SMF entity, UPF entity, AP entity, AS, or base station)) may be any one of various entities included in a communication system (e.g., a mobile communication network).

FIG. 9 is a view schematically illustrating an example of a structure of a network entity according to an embodiment of the disclosure.

The embodiment of the network entity illustrated in FIG. 9 is for illustrative purposes only, and FIG. 9 does not limit the scope of the disclosure to any specific implementation of the network entity.

Referring to FIG. 9, the network entity includes a plurality of antennas 905a to 905n, a plurality of radio frequency (RF) transceivers 910a to 910n, a transmit (TX) processing circuit 915, and a receive (RX) processing circuit 920. The network entity further includes a controller/processor 925, memory 930, and a backhaul or network interface 935.

The RF transceivers 910a to 910n receive input RF signals, such as signals transmitted from UEs in the network, through the antennas 905a to 905n. The RF transceivers 910a to 910n down-convert the input RF signals, generating intermediate frequency (IF) or baseband signals. The IF or baseband signals are transmitted to the RX processing circuit 920, and the RX processing circuit 920 filters, decodes, and/or digitizes the baseband or IF signals, generating processed baseband signals. The RX processing circuit 920 sends the processed baseband signals to the controller/processor 925 for further processing.

The TX processing circuit 915 receives analog or digital data, such as speech data, web data, emails, or interactive video game data, from the controller/processor 925. The TX processing circuit 915 encodes, multiplexes, and/or digitizes the output baseband data, generating processed baseband or IF signals. The RF transceivers 910a to 910n receive the processed baseband or IF signals output from the TX processing circuit 915 and up-convert the baseband or IF signals into RF signals which are to be transmitted through the antennas 905a to 905n.

The controller/processor 925 may include one or more processors or other processing devices that control the overall operation of the network entity. In one example, the controller/processor 925 may control reception of forward channel signals and transmission of reverse channel signals by the RF transceivers 910a to 910n, the processing circuit 920, and the TX processing circuit 915 according to known principles. The controller/processor 925 may support additional functions, such as more advanced wireless communication functions.

In various embodiments of the disclosure, the controller/processor 925 performs the overall operation (e.g., operation of providing congestion information) related to providing an L4S service.

Further, the controller/processor 925 may support beamforming or directional routing operations in which signals output from the plurality of antennas 905a to 905n are differently weighted to efficiently steer the signals output in a desired direction. Any of other various functions may be supported by the controller/processor 925 in the network entity.

The controller/processor 925 may also execute programs and other processes, e.g., operating system (OS), resident in the memory 930. The controller/processor 925 may move data as required by a running process to the memory 930 or the outside of the memory 930.

The controller/processor 925 is connected with the backhaul or network interface 935. The backhaul or network interface 935 allows the network entity to communicate with other devices or systems over a backhaul connection or over a network. The interface 935 may support communications over any appropriate wired or wireless connection(s). For example, when the network entity is implemented as a part of a cellular communication system (such as a cellular communication system supporting 5G, LTE, or LTE-A), the interface 935 allows the network entity to communicate with other network entities via a wired or wireless backhaul connection. When the network entity is implemented as an access point, the interface 935 allows the network entity to communicate with a larger network (e.g., the Internet) via a wired or wireless local area network or a wired or wireless connection. The interface 935 includes an appropriate structure to support communications through a wired or wireless connection, such as Ethernet or RF transceiver.

The memory 930 is connected to the controller/processor 925. A portion of the memory 930 may include a random access memory (RAM), and another portion of the memory 930 may include a flash memory or a read-only memory (ROM).

Although FIG. 9 illustrates an example of a network entity, various changes may be made thereto. As an example, the network entity may include any number of such components as illustrated in FIG. 9. As a specific example, an access point may include a plurality of interfaces 935, and the controller/processor 925 may support routing functions to route data between different network addresses. As another specific example, although it is illustrated that a single instance of the TX processing circuit 915 and a single instance of the RX processing circuit 920 are included, the network entity may include a plurality of instances of each (like one for each RF transceiver). Various components of FIG. 9 may be combined together, or each component may be further divided or some components may be omitted or, as necessary, more components may be added.

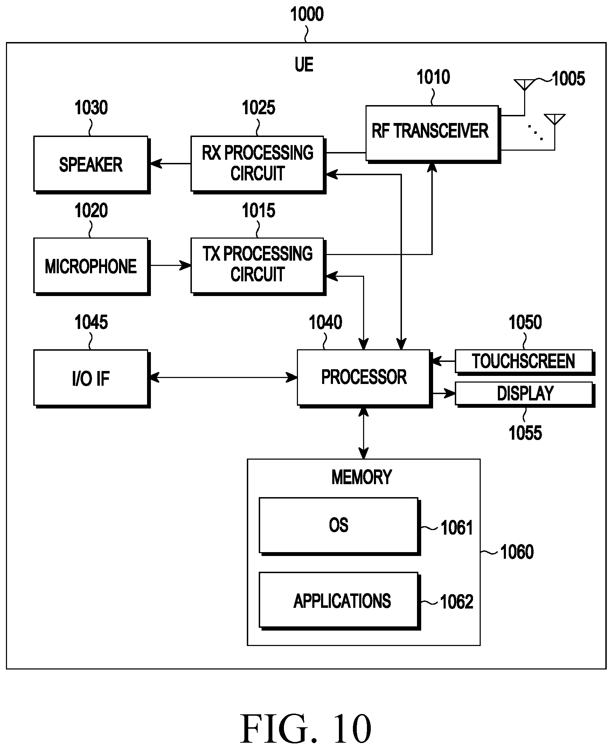

A structure of a UE according to an embodiment of the disclosure is described below with reference to FIG. 10.

FIG. 10 is a view schematically illustrating an example of a structure of a UE according to an embodiment of the disclosure.

The embodiment of the UE illustrated in FIG. 10 is for illustrative purposes only, and the scope of the disclosure is not limited thereto.

As illustrated in FIG. 10, the UE may include an antenna 1005, a radio frequency (RF) transceiver 1010, a transmit (TX) processing circuit 1015, a microphone 1020, and a receive (RX) processing circuit 1025. The UE further includes a speaker 1030, a processor 1040, an input/output (I/O) interface (IF) 1045, a touch screen 1050, a display 1055, and memory 1060. The memory 1060 includes an operating system (OS) 1061 and one or more applications 1062.

The RF transceiver 1010 receives an input RF signal transmitted from a network entity in a network, via the antenna 1005. The RF transceiver 1010 down-converts the input RF signal, generating an intermediate frequency (IF) or baseband signal. The IF or baseband signal is transmitted to the RX processing circuit 1025, and the RX processing circuit 1025 filters, decodes, and/or digitizes the baseband or IF signal, generating a processed baseband signal. The RX processing circuit 1025 sends the processed baseband signal to the speaker 1030 (e.g., for speech data) or the processor 1040 (e.g., for web browsing data) for further processing.

The TX processing circuit 1015 receives analog or digital speech data from the microphone 1020 or other output baseband data (e.g., web data, emails, or interactive video game data) from the processor 1040. The TX processing circuit 1015 encodes, multiplexes, and/or digitizes the output baseband data, generating a processed baseband or IF signal. The RF transceiver 1010 receives the processed baseband or IF signal output from the TX processing circuit 1015 and up-converts the baseband or IF signal into an RF signal which is to be transmitted through the antenna 1005.

The processor 1040 may include one or more processors or other processing devices, and may execute the OS 1061 stored in the memory 1060 to control the overall operation of the UE. As an example, the processor 1040 may control reception of downlink channel signals and transmission of uplink channel signals by the RF transceiver 1010, the RF processing circuit 1025, and the TX processing circuit 1015 according to known principles. In an embodiment, the processor 1040 includes at least one microprocessor or microcontroller.

In an embodiment of the disclosure, the processor 1040 performs the overall operation (e.g., operation of providing congestion information) related to providing an L4S service.

The processor 1040 may execute other processes and programs embedded in the memory 1060, such as processes related to the L4S service. The processor 1040 may move data into or out of the memory 1060 as required by a running process. In an embodiment, the processor 1040 is configured to execute the applications 1062 based on the OS program 1061 or in response to signals received from network entities or the operator. The processor 1040 is coupled to the I/O interface 1045, and the I/O interface 1045 provides the UE with connectibility to other devices, e.g., laptop computers and handheld computers. The I/O interface 1045 is a communication path between these accessories and the processor 1040.

The processor 1040 is also connected to the touch screen 1050 and the display unit 1055. The operator of the UE may input data into the UE using the touch screen 1050. The display 1055 may be a liquid crystal display, a light emitting diode display, or other displays capable of rendering text and/or at least limited graphics, such as from websites.

The memory 1060 is connected to the processor 1040. A portion of the memory 1060 may include a random access memory (RAM), and the remainder of the memory 1060 may include a flash memory or a read-only memory (ROM).

Although FIG. 10 illustrates an example UE, various changes may be made thereto. For example, various components of FIG. 10 may be combined together, each component may be further divided, or some components may be omitted, or other components may be added as necessary. As an example, the processor 1040 may be divided into multiple processors, such as one or more central processing units (CPUs) and one or more graphics processing units (GPUs). Although the UE is configured like a mobile phone or a smart phone in FIG. 10, the UE may be configured to operate as a different type of mobile or stationary device.

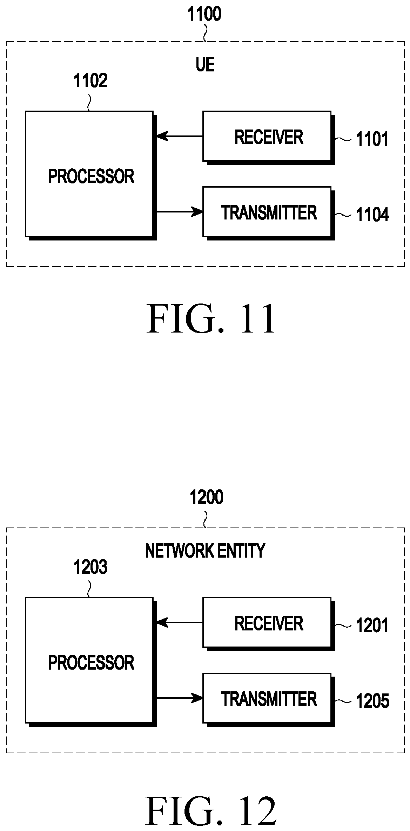

Another example of a structure of a UE according to an embodiment of the disclosure is described below with reference to FIG. 11.

FIG. 11 is a block diagram schematically illustrating another example of a structure of a UE according to an embodiment of the disclosure.

Referring to FIG. 11, the UE may include a receiver 1100, a transmitter 1104, and a processing unit (or at least one processor) 1102. The receiver 1100 and the transmitter 1104 may collectively be referred to as a transmission/reception unit (or transceiver) in an embodiment of the disclosure. The transceiver may transmit/receive signals to/from the network entity. The signals may include control information and data. To that end, the transceiver may include an RF transmitter for frequency-up converting and amplifying transmitted signals and an RF receiver for low-noise amplifying and frequency-down converting received signals. The transceiver may receive signals via a radio channel, output the signals to the processor 1102, and transmit signals output from the processor 1102 via a radio channel. The processor 1102 may control a series of processes for the UE to operate according to the above-described embodiments of the disclosure.

Another example of a structure of a network entity according to an embodiment of the disclosure is described below with reference to FIG. 12.

FIG. 12 is a block diagram schematically illustrating another example of a structure of a network entity according to an embodiment of the disclosure. A network entity (or network device (e.g., RAN node, AF entity, UDM entity, PCF entity, NRF entity, NEF entity, NSSF entity, AUSF entity, AMF entity, SMF entity, UPF entity, AP entity, AS, or base station)) may be any one of various entities included in a communication system (e.g., a mobile communication network).

Referring to FIG. 12, the network entity may include a receiver 1201, a transmitter 1205, and a processing unit (or at least one processor) 1203. The receiver 1201 and the transmitter 1205 may collectively be referred to as a transmission/reception unit (or transceiver) in an embodiment of the disclosure. The transceiver may transmit/receive signals to/from the UE. The signals may include control information and data. To that end, the transceiver may include an RF transmitter for frequency-up converting and amplifying transmitted signals and an RF receiver for low-noise amplifying and frequency-down converting received signals. The transceiver may receive signals via a radio channel, output the signals to the processor 1203, and transmit signals output from the processor 1203 via a radio channel. The processor 1203 may control a series of processes for the network entity to operate according to the above-described embodiments of the disclosure.

According to an embodiment of the disclosure, a method performed by a session management function (SMF) entity in a communication system may comprise identifying that an explicit congestion notification (ECN) marking function for a low latency, low loss and scalable throughput (L4S) service is activated in a source radio access network (S-RAN) of a UE while the ECN marking function for the L4S is not activated in a target RAN (T-RAN) of the UE.

According to an embodiment of the disclosure, the method may comprise, based on identifying that the ECN marking function for the L4S service is activated in the S-RAN while the ECN marking function for the L4S is not activated in the T-RAN, transmitting information for requesting to activate the ECN marking function for the L4S to a user plane function (UPF) entity.

According to an embodiment of the disclosure, the information for requesting to activate the ECN marking function for the L4S may be transmitted through N4.

According to an embodiment of the disclosure, each of the S-RAN and the T-RAN may be an NG-RAN.

According to an embodiment of the disclosure, identifying that the ECN marking function for the L4S service is activated in the S-RAN while the ECN marking function for the L4S is not activated in the T-RAN may include receiving information related to whether the ECN marking function for the L4S is activated from the T-RAN.

According to an embodiment of the disclosure, identifying that the ECN marking function for the L4S service is activated in the S-RAN while the ECN marking function for the L4S is not activated in the T-RAN may include identifying that the ECN marking function for the L4S is not activated in the T-RAN based on the information related to whether the ECN marking function for the L4S is activated.

According to an embodiment of the disclosure, identifying that the ECN marking function for the L4S service is activated in the S-RAN while the ECN marking function for the L4S is not activated in the T-RAN may include receiving the information for requesting to activate the ECN marking function for the L4S from the T-RAN.

According to an embodiment of the disclosure, identifying that the ECN marking function for the L4S service is activated in the S-RAN while the ECN marking function for the L4S is not activated in the T-RAN may include identifying that the ECN marking function for the L4S is not activated in the T-RAN based on the information for requesting to activate the ECN marking function for the L4S.

According to an embodiment of the disclosure, a session management function (SMF) entity in a communication system may comprise a transceiver and at least one processor.

According to an embodiment of the disclosure, the at least one processor may be configured to identify that an explicit congestion notification (ECN) marking function for a low latency, low loss and scalable throughput (L4S) service is activated in a source radio access network (S-RAN) of a UE while the ECN marking function for the L4S is not activated in a target RAN (T-RAN) of the UE.

According to an embodiment of the disclosure, the at least one processor may be configured to, based on identifying that the ECN marking function for the L4S service is activated in the S-RAN while the ECN marking function for the L4S is not activated in the T-RAN, transmit, through the transceiver, information for requesting to activate the ECN marking function for the L4S to a user plane function (UPF) entity.

According to an embodiment of the disclosure, the information for requesting to activate the ECN marking function for the L4S may be transmitted through N4.

According to an embodiment of the disclosure, each of the S-RAN and the T-RAN may be an NG-RAN.

According to an embodiment of the disclosure, the at least one processor may be configured to receive, through the transceiver, information related to whether the ECN marking function for the L4S is activated from the T-RAN.

According to an embodiment of the disclosure, the at least one processor may be configured to identify that the ECN marking function for the L4S is not activated in the T-RAN based on the information related to whether the ECN marking function for the L4S is activated.

According to an embodiment of the disclosure, the at least one processor may be configured to receive, through the transceiver, the information for requesting to activate the ECN marking function for the L4S from the T-RAN.

According to an embodiment of the disclosure, the at least one processor may be configured to identify that the ECN marking function for the L4S is not activated in the T-RAN based on the information for requesting to activate the ECN marking function for the L4S.

According to an embodiment of the disclosure, a user plane function (UPF) entity in a communication system may comprise a transceiver and at least one processor.

According to an embodiment of the disclosure, the at least one processor may be configured to receive, through the transceiver, information for requesting to activate an explicit congestion notification (ECN) marking function for a low latency, low loss and scalable throughput (L4S) service from a user plane function (UPF) entity from a session management function (SMF) entity.

According to an embodiment of the disclosure, the information for requesting to activate the ECN marking function for the L4S may be received when the ECN marking function for the L4S service is activated in a source radio access network (S-RAN) of a UE is activated while the ECN marking function for the L4S is not activated in a target RAN (T-RAN).

According to an embodiment of the disclosure, the information for requesting to activate the ECN marking function for the L4S may be received through N4.

According to an embodiment of the disclosure, each of the S-RAN and the T-RAN may be an NG-RAN.

According to an embodiment of the disclosure, the SMF entity may receive information related to whether the ECN marking function for the L4S is activated from the T-RAN and identify that the ECN marking function for the L4S is not activated in the T-RAN based on the information related to whether the ECN marking function for the L4S is activated.

According to an embodiment of the disclosure, the SMF entity may receive the information for requesting to activate the ECN marking function for the L4S from the T-RAN and identify that the ECN marking function for the L4S is not activated in the T-RAN based on the information for requesting to activate the ECN marking function for the L4S. The embodiments of the disclosure herein are provided merely for better understanding of the present disclosure, and the present disclosure should not be limited thereto or thereby. In other words, it is apparent to one of ordinary skill in the disclosure that various changes may be made thereto without departing from the scope of the present disclosure. Further, the embodiments may be practiced in combination. Although the disclosure has been described in connection with embodiments thereof, various changes or modifications may be made thereto and proposed to one of ordinary skill in the art. Such changes or modifications are intended as belonging to the scope of the appended claims. None of the elements, processes, or functions described herein should be interpreted as essential elements that should be included in the scope of the claims. The scope of the subject matter is defined by the claims.

## Claims

1. A method performed by a session management function (SMF) entity in a communication system, the method comprising:
identifying that an explicit congestion notification (ECN) marking function for a low latency, low loss and scalable throughput (L4S) service is activated in a source radio access network (S-RAN) of a UE while the ECN marking function for the L4S is not activated in a target RAN (T-RAN) of the UE; and
based on identifying that the ECN marking function for the L4S service is activated in the S-RAN while the ECN marking function for the L4S is not activated in the T-RAN, transmitting information for requesting to activate the ECN marking function for the L4S to a user plane function (UPF) entity.

2. The method of claim 1, wherein the information for requesting to activate the ECN marking function for the L4S is transmitted through N4.

3. The method of claim 1, wherein each of the S-RAN and the T-RAN is an NG-RAN.

4. The method of claim 1, wherein identifying that the ECN marking function for the L4S service is activated in the S-RAN while the ECN marking function for the L4S is not activated in the T-RAN includes:
receiving information related to whether the ECN marking function for the L4S is activated from the T-RAN; and
identifying that the ECN marking function for the L4S is not activated in the T-RAN based on the information related to whether the ECN marking function for the L4S is activated.

5. The method of claim 1, wherein identifying that the ECN marking function for the L4S service is activated in the S-RAN while the ECN marking function for the L4S is not activated in the T-RAN includes:
receiving the information for requesting to activate the ECN marking function for the L4S from the T-RAN; and
identifying that the ECN marking function for the L4S is not activated in the T-RAN based on the information for requesting to activate the ECN marking function for the L4S.

6. A session management function (SMF) entity in a communication system, comprising:
a transceiver; and
at least one processor, wherein the at least one processor is configured to:
identify that an explicit congestion notification (ECN) marking function for a low latency, low loss and scalable throughput (L4S) service is activated in a source radio access network (S-RAN) of a UE while the ECN marking function for the L4S is not activated in a target RAN (T-RAN) of the UE; and
based on identifying that the ECN marking function for the L4S service is activated in the S-RAN while the ECN marking function for the L4S is not activated in the T-RAN, transmit, through the transceiver, information for requesting to activate the ECN marking function for the L4S to a user plane function (UPF) entity.

7. The SMF entity of claim 6, wherein the information for requesting to activate the ECN marking function for the L4S is transmitted through N4.

8. The SMF entity of claim 6, wherein each of the S-RAN and the T-RAN is an NG-RAN.

9. The SMF entity of claim 6, wherein the at least one processor is configured to:
receive, through the transceiver, information related to whether the ECN marking function for the L4S is activated from the T-RAN; and
identify that the ECN marking function for the L4S is not activated in the T-RAN based on the information related to whether the ECN marking function for the L4S is activated.

10. The SMF entity of claim 6, wherein the at least one processor is configured to:
receive, through the transceiver, the information for requesting to activate the ECN marking function for the L4S from the T-RAN; and
identify that the ECN marking function for the L4S is not activated in the T-RAN based on the information for requesting to activate the ECN marking function for the L4S.

11. A user plane function (UPF) entity in a communication system, comprising:
a transceiver; and
at least one processor, wherein the at least one processor is configured to:
receive, through the transceiver, information for requesting to activate an explicit congestion notification (ECN) marking function for a low latency, low loss and scalable throughput (L4S) service from a user plane function (UPF) entity from a session management function (SMF) entity, and
wherein the information for requesting to activate the ECN marking function for the L4S is received when the ECN marking function for the L4S service is activated in a source radio access network (S-RAN) of a UE is activated while the ECN marking function for the L4S is not activated in a target RAN (T-RAN).

12. The UPF entity of claim 11, wherein the information for requesting to activate the ECN marking function for the L4S is received through N4.

13. The UPF entity of claim 11, wherein each of the S-RAN and the T-RAN is an NG-RAN.

14. The UPF entity of claim 11, wherein the SMF entity receives information related to whether the ECN marking function for the L4S is activated from the T-RAN and identifies that the ECN marking function for the L4S is not activated in the T-RAN based on the information related to whether the ECN marking function for the L4S is activated.

15. The UPF entity of claim 11, wherein the SMF entity receives the information for requesting to activate the ECN marking function for the L4S from the T-RAN and identifies that the ECN marking function for the L4S is not activated in the T-RAN based on the information for requesting to activate the ECN marking function for the L4S.
